# EUROPEAN PATENT SPECIFICATION

(11) **EP 1 925 110 B1**
(45) Date of publication and mention of the grant of the patent: **27.02.2019**
(21) Application number: 06802258.1
(22) Date of filing: 23.08.2006
(51) Int. Cl.: H04M 9/08, H04B 3/32

(54) **METHOD AND SYSTEM FOR SIGNAL EMULATION**
VERFAHREN UND SYSTEM ZUR SIGNALEMULATION
PROCEDE ET SYSTEME POUR L'EMULATION DE SIGNAL

(30) Priority: 23.08.2005 US 710573 P
(43) Date of publication of application: 28.05.2008
(73) Proprietor: Intersil Americas LLC, Milpitas, CA 95035 (US)
(72) Inventor: SCHMUKLER, Bruce, C., Duluth, GA 30097 (US); RAGHAVAN, Arvind, Waltham, MA 02452 (US); NAMI, Ziba, Duluth, GA 30097 (US); PEDDI, Jyothi, Emmanuel, Austell, GA 30106 (US); KIM, Andrew, Joo, Atlanta, GA 30363 (US); VRAZEL, Michael, G., Chamblee, GA 30341 (US); SUMMERS, Charles, E., Woodstock, GA 30188 (US)
(74) Representative: Maiwald Patent- und Rechtsanwaltsgesellschaft mbH
(86) International application number: PCT/US2006/033067
(87) International publication number: WO 2007/025040

(56) References cited:
- US-A1- 2002 167 693
- US-A1- 2002 196 510
- US-A1- 2004 012 433
- US-A1- 2004 213 354
- US-A1- 2005 030 884

## Description

### FIELD OF THE INVENTION

The present invention relates to the field of communications, and more specifically to modeling, emulating, or simulating signals or signal effects such as crosstalk interference that can occur between two or more high-speed communication channels.

### BACKGROUND

Increased consumption of communication services fuels a need for increased data carrying capacity or bandwidth in communication systems. A phenomenon known as crosstalk often occurs in these communication systems and can impair high-speed signal transmission and thus limit communication bandwidth to an undesirably low level.

Crosstalk is a condition that arises in communications systems wherein a signal in one communication channel is corrupted by interference (or bleed-over) from a different signal being communicated over another channel. The interference may arise due to a variety of effects. For example, in electrical systems such as circuit boards, electrical connectors, and twisted pair cable bundles, each electrical path serves as a channel. At high communication speeds, these conductive paths behave like antennae, both radiating and receiving electromagnetic energy. The radiated energy from one channel, referred to herein as the "aggressing channel," is undesirably coupled into or received by another channel, referred to herein as the "victim channel." This undesirable transfer of signal energy, known as "crosstalk," can compromise data integrity on the receiving channel. Crosstalk is typically bidirectional in that a single channel can both radiate energy to one or more other channels and receive energy from one or more other channels.

Crosstalk can occur in several ways, such as capacitively coupled crosstalk, inductively coupled crosstalk, or radiated crosstalk. Crosstalk can be a major problem in a backplane or cable environment. Coupling in multi-pin connectors is often a primary mechanism of crosstalk. When coupling occurs at the transmission end or proximal end of a communication link, it is often referred to as near-end crosstalk or "NEXT." When occurring at the receiving or distal side, the coupling is often referred to as far-end crosstalk or "FEXT." NEXT is generally more severe than FEXT.

In a backplane system, NEXT is usually generated by transmit signals interfering with receive signals. Such transmit signal can originate in a serializer/deserializer ("SERDES") device that may be an integrated circuit. The receive signals are generally attenuated when they arrive at the SERDES device, which usually makes the transmit signals larger than the receive signals. NEXT coming from the transmit signals can severely impair the quality of the receive signals to the point that bit errors occur.

Crosstalk is emerging as a significant barrier to increasing throughput rates of communications systems. When not specifically addressed, crosstalk often manifests itself as noise. In particular, crosstalk degrades signal quality by increasing uncertainty in the received signal value thereby making reliable communications more difficult, i.e. data errors occur with increased probability. In other words, crosstalk typically becomes more problematic at increased data rates. Not only does crosstalk reduce signal integrity, but additionally, the amount of crosstalk often increases with the bandwidth of the aggressing signal, thereby making higher data rate communications more difficult. This is particularly the case in electrical systems employing binary or multi-level signaling, since the conductive paths over which such signals flow usually radiate and receive energy more efficiently at the high frequencies associated with the level transitions in these signals. In other words, each signal in a binary or multi-level communication signal is composed of high-frequency signal components that are more susceptible to crosstalk degradation, as compared to the lower frequency components.

The crosstalk impediment to increasing data throughput rates is further compounded by the tendency of the high-frequency content of the victim signal to attenuate heavily over long signal transmission path lengths (e.g. circuit traces that are several inches in length for multi-gigabit per second data rates). That is, high-frequency components of a communication signal not only receive a relatively high level of crosstalk interference, but also are susceptible to interference because they are often weak due to transmission losses.

While these attenuated high-frequency components can be amplified via a technique known as channel equalization, such channel equalization frequently increases noise and crosstalk as a byproduct of amplifying the high-frequency signals that carry data. The amount of crosstalk present in a communication link often limits the level of equalization that can be utilized to restore signal integrity. For example, at the multi-gigabit per second data rates desired for next-generation backplane systems, the level of crosstalk energy on a communication channel can exceed the level of victim signal energy at the high frequencies that underlie such high-speed communication. In this condition, extraneous or stray signal energy can dominate the energy of the desirable data-carrying signals, thus rendering communicating at these data rates impractical with most conventional system architectures.

The term "noise," as used herein, is distinct from crosstalk and refers to a completely random phenomenon. Crosstalk, in contrast, is a deterministic, but often unknown, parameter. The conventional art includes knowledge that it is theoretically possible to modify a system in order to mitigate crosstalk. In particular, with definitions of: (i) the data communicated over an interfering or aggressing channel; and (ii) the signal transformation that occurs in coupling from the aggressing channel to the victim channel, the crosstalk can be theoretically determined and cancelled. That is, those skilled in the art understand that crosstalk signal degradation can be cancelled if the data carried by a communication signal that is input into a communication channel is known and the signal transformation imposed on the communication signal by crosstalk is also known. However, achieving a level of definition of this signal transformation having sufficient precision and accuracy to support a practical implementation of a system that adequately cancels crosstalk is difficult with conventional technology. Consequently, conventional technology that addresses crosstalk is generally insufficient for high-speed (e.g. multi-gigabit per second) communications systems. Thus, there is a need in the art to cancel crosstalk so as to improve victim signal fidelity and remove the barrier that crosstalk often poses to increasing data throughput rates.

While the physics giving rise to crosstalk (e.g. electromagnetic coupling in electrical systems or four-wave-mixing in optical systems) is generally well understood, understanding alone does not provide direct and simple models for the crosstalk transfer function. One common reason for conventional modeling difficulties is that the relative geometries of the victim and aggressor signal paths heavily influence the transfer function of the crosstalk effect, and these paths can be quite convoluted. In other words, signal path complexity typically checks efforts to model crosstalk using conventional modeling methods based on analyzing signal conduits. Furthermore, it is generally undesirable to design a crosstalk canceller for a predetermined specific crosstalk response since: (i) a system may have many different responses for different victim-aggressor pairs (each requiring a specific design); and (ii) different systems may need different sets of designs. Thus, there is a need in the art for a crosstalk cancellation system and method with sufficient flexibility to: (i) accommodate the variety of crosstalk transfer functions that can stem from ordinary operations of a given system; and (ii) self-calibrate in order to avoid a complex manual task of characterizing and adjusting for each victim-aggressor pair.

Another limitation of conventional technologies for crosstalk cancellation concerns speed, as such technologies are typically not well suited to high-speed environments, such as channels supporting multi-gigabaud rates. That is, crosstalk cancellation devices based on conventional data processing techniques may not operate at a sufficient speed to accommodate data transmission rates exceeding one, two, or ten gigabits per second, for example. More broadly, conventional technologies for emulating signals or signal effects often lack adequate signal processing speed for a wide variety of applications.

To address these representative deficiencies in the art, what is needed is a capability for crosstalk cancellation compatible with high-speed environments but offering low power consumption and reasonable production cost. Another need exists for a high-speed circuit that can emulate or model signals, signal transformations, or signal effects. Yet another need exists for an analog or mixed-signal circuit that can accurately and precisely emulate, model, or simulate signals, signal transformations, or signal effects. Still another need exists for a system that can compensate for crosstalk occurring on data transmission channels that operate at one, two, or ten gigabits per second, or more. Such capabilities would facilitate improved signal processing and/or would support higher data rates and improve bandwidth in diverse communication applications. US 2005/030884 A1 describes that signals propagating in one communication channel can generate crosstalk interference in another communication channel. A crosstalk cancellation device can process the signals causing the crosstalk interference and generate a crosstalk cancellation signal that can compensate for the crosstalk when applied to the channel receiving crosstalk interference. The crosstalk cancellation device can include a model of the crosstalk effect that generates a signal emulating the actual crosstalk both in form an in timing. The crosstalk cancellation device can include a controller that monitors crosstalk-compensated communication signals and adjusts the model to enhance crosstalk cancellation performance.; The crosstalk cancellation device can have a mode of self configuration or calibration in which defined test signals can be transmitted on the crosstalk-generating channel and the crosstalk-receiving channel.

### SUMMARY

The present invention supports processing a sample of a signal to emulate, simulate, model, or otherwise represent an effect on the signal. The effect can comprise a signal transformation, a signal delay, a synchronization of the signal with some other signal or event, a reshaping or distortion of the signal, a crosstalk effect, another signal, or a transfer of energy from the sampled signal to some other signal, to name a few possibilities.

In one aspect of the present invention, a circuit can produce a representation of a signal transformation by processing the sample of the signal according to one or more signal processing parameters that are characteristic of the signal transformation. Accordingly, the circuit can process a sample of a digital signal to produce a representation of a real-world signal transformation or of a theoretical signal effect. The digital signal may comprise a discrete number of digitized levels, for example two levels for a binary signal. Processing the sample of the digital signal can comprise applying analog signal processing, so that at various stages of processing, the sample retains the same number of digitized levels as the digital signal itself. In other words, processing the sample does not necessarily involve digitizing the sample beyond any digitization already present in the pre-sampled digital signal. Nevertheless, processing can proceed under digital control, for example via feedback from a digital controller that sets one or more processing parameters. Accordingly, the circuit can apply analog signal processing, mixed signal processing, or a combination of analog and digital processing to the signal, for example.

Processing the sample can comprise delaying and/or shaping the sample. For shaping of the sample, a finite impulse filter can process the sample to create a desired waveform shape. The finite impulse filter can comprise an analog implementation of a tapped delay line. The sample can transmit through a series of delay stages, each having a capability to add energy to the sample to mitigate high-frequency attenuation or roll-off. That is, the tapped delay line can comprise active elements.

The circuit can feed components of the sample, or essentially the entire sample, through two signal paths of differing delay. Thus, the two signal paths can output two signals, one leading the other in time. The circuit can apply respective weights, scaling factors, or gains to the two signals. The weights can be complementary or can be reciprocals of one another, so that when one increases, the other decreases. The circuit can combine the two weighted signals via addition, subtraction, summation, or some other form of signal combination.

The circuit can also or alternatively routing the sample through a network of delay elements, wherein one or more switching devices, routing elements, or transistors determines the route and thus the resulting delay. Thus, the circuit can comprise two (or more) delay elements. To impart the sample with a selected amount of delay, the circuit can route the sample through the two delay elements. When less delay is desired, the circuit can route the signal through one of the delay elements while bypassing the other delay element. In this manner, the circuit can provide a configurable level of delay.

The discussion of emulating signal effects presented in this summary is for illustrative purposes only. Various aspects of the present invention may be more clearly understood and appreciated from a review of the following detailed description of the disclosed embodiments and by reference to the drawings and the claims that follow. Moreover, other aspects, systems, methods, features, advantages, and objects of the present invention will become apparent to one with skill in the art upon examination of the following drawings and detailed description. It is intended that all such aspects, systems, methods, features, advantages, and objects are to be included within this description, are to be within the scope of the present invention, and are to be protected by any accompanying claims.

The invention is set out in the appended set of claims. The embodiments and/or examples of the following description which are not covered by the appended claims are considered as not being part of the present invention.

### BRIEF DESCRIPTION OF THE DRAWINGS

Figure 1 illustrates a functional block diagram of a communication system having two linecards communicating over a backplane and incurring crosstalk.
Figure 2 illustrates a functional block diagram of a crosstalk model for the system illustrated in Figure 1.
Figure 3 illustrates a plot of a crosstalk response for a backplane-to-linecard connector according to an exemplary embodiment of the present invention.
Figure 4 illustrates a functional block diagram of a crosstalk cancellation system according to an exemplary embodiment of the present invention.
Figure 5 illustrates a functional block diagram of a crosstalk cancellation system including functional blocks of a crosstalk cancellation device according to an exemplary embodiment of the present invention.
Figure 6 is a functional block diagram of a tapped delay line filter according to an exemplary embodiment of the present invention.
Figure 7 is a functional block diagram of a crosstalk modeling filter of a crosstalk cancellation device with an adjustable delay according to an exemplary embodiment of the present invention.
Figure 8 is a functional block diagram of a crosstalk modeling filter of a crosstalk cancellation device with a high-pass filter according to an exemplary embodiment of the present invention.
Figure 9 is a functional block diagram of a control module of a crosstalk cancellation device according to an exemplary embodiment of the present invention.
Figure 10 is a flow chart illustrating a process for canceling crosstalk according to an exemplary embodiment of the present invention.
Figure 11 is a flow chart illustrating a process for calibrating a crosstalk cancellation device according to an exemplary embodiment of the present invention.
Figures 12A and 12B, collectively Figure 12, respectively illustrate testing data of a communication system before and after implementing crosstalk cancellation according to an exemplary embodiment of the present invention.
Figure 13 is a functional block diagram of a signal delay device based on a tapped delay line filter according to an exemplary embodiment of the present invention.
Figure 14 is a schematic of a passive circuit that simulates a transmission line according to an exemplary embodiment of the present invention.
Figure 15 is a functional block diagram of a circuit for emulating, simulating, or modeling signals, signal effects, or signal transformations according to an exemplary embodiment of the present invention.
Figure 16 is a plot of attenuation as a function of frequency for a linear circuit of passive filtering stages that are cascaded together according to an exemplary embodiment of the present invention.
Figure 17 is a plot of signal amplitude as a function of time for a circuit based on active stages that are connected in series according to an exemplary embodiment of the present invention.
Figure 18 is a functional block diagram of a circuit for controllably delaying an input signal according to an exemplary embodiment of the present invention.
Figures 19A, 19B, and 19C, collectively Figure 19, are a schematic of a circuit for controllably delaying an input signal according to an exemplary embodiment of the present invention.
Figure 20 is a functional block diagram of a circuit for controlling signal delay according to an exemplary embodiment of the present invention.
Figure 21 is a schematic of a circuit for controlling signal delay according to an exemplary embodiment of the present invention.
Figure 22 is a schematic of a finite impulse response (FIR) filter according to an exemplary embodiment of the present invention.
Figure 23 is a plot of voltage as a function of time for an output pulse from an emulation circuit according to an exemplary embodiment of the present invention.
Figure 24 is a plot of voltage as a function of time for an output pulse from an emulation circuit according to an exemplary embodiment of the present invention.
Figure 25 is graph of a family of delay plots for an emulation circuit according to an exemplary embodiment of the present invention.
Figure 26 is a plot of measured delay as a function of delay setting for an emulation circuit according to an exemplary embodiment of the present invention.
Figure 27 is a plot of rise time for an emulation circuit according to an exemplary embodiment of the present invention.
Figure 28 is an eye diagram for an emulation circuit according to an exemplary embodiment of the present invention.
Figure 29 is a flowchart of a process for delaying a signal in connection with emulating an effect on the signal according to an exemplary embodiment of the present invention.
Figure 30 is a flowchart of a process for combining delayed signals in connection with emulating a signal transformation according to an exemplary embodiment of the present invention.

Many aspects of the invention can be better understood with reference to the above drawings. The components in the drawings are not necessarily to scale, emphasis instead being placed upon clearly illustrating the principles of exemplary embodiments of the present invention. Moreover, in the drawings, reference numerals designate like or corresponding, but not necessarily identical, elements throughout the several views.

### DETAILED DESCRIPTION OF EXEMPLARY EMBODIMENTS

The present invention can support modeling a signal transformation, such as the unwanted coupling of a first signal into the channel of another signal, via applying selectable levels of time delay and frequency-dependent gain to a signal sample.

An exemplary embodiment of the present invention can support canceling crosstalk on one or more communication paths in a communication system, such as a high-speed digital data communication system. That is, an exemplary embodiment of the present invention can support compensating for signal interference, such as crosstalk, occurring between two or more communication channels. Compensating for crosstalk can improve signal quality and enhance communication bandwidth or information carrying capability.

A flexible and adaptable model of the crosstalk effect can output a cancellation signal that accurately represents crosstalk interference. Coupling this cancellation signal onto a signal path that has crosstalk can cancel such crosstalk and thereby negate the impairment that crosstalk can impose on bandwidth.

A communication signal transmitted on one communication channel can couple an unwanted signal, such as crosstalk, into another communication channel and interfere with communication signals transmitting on that channel. In addition to occurring between two channels, this crosstalk effect can couple between and among multiple communication channels with each channel imposing crosstalk on two or more channels and receiving crosstalk from two or more channels. A channel can be a medium, such as an electrical conductor or an optical fiber that provides a signal path. A single optical fiber or wire can provide a transmission medium for two or more channels, each communicating digital or analog information. Alternatively, each channel can have a dedicated transmission medium. For example, a circuit board can have multiple conductors in the form of circuit traces, in which each trace provides a dedicated communication channel.

In one exemplary embodiment of the present invention, a crosstalk cancellation device can input a crosstalk cancellation signal into a channel receiving crosstalk interference to cancel or otherwise compensate for the received crosstalk. The crosstalk cancellation signal can be derived or produced from a signal that is propagating on another channel, generating the crosstalk. The crosstalk cancellation device can be coupled between the channel that generates the crosstalk and the channel that receives the crosstalk. In this configuration, the crosstalk cancellation device can sample or receive a portion of the signal that is causing the crosstalk and can compose the crosstalk cancellation signal for application to the channel that is receiving the unwanted crosstalk. In other words, the crosstalk cancellation device can tap into the channel that is causing the crosstalk, generate a crosstalk cancellation signal, and apply the crosstalk cancellation signal to the channel receiving crosstalk interference to provide crosstalk cancellation or correction.

In one exemplary embodiment of the present invention, the crosstalk cancellation device can generate the crosstalk cancellation signal via a model of the crosstalk effect. The model can generate the crosstalk cancellation signal in the form of a signal that estimates, approximates, emulates, or resembles the crosstalk signal. The crosstalk cancellation signal can have a waveform or shape that matches the actual crosstalk signal. A setting or adjustment that adjusts the model, such as a set of modeling parameters, can define characteristics of this waveform.

The crosstalk cancellation signal can be synchronized with the actual crosstalk signal. That is, the timing of the crosstalk cancellation signal can be adjusted to match the timing of the actual crosstalk signal. A timing delay or other timing parameter can define the relative timing or temporal correspondence between the crosstalk cancellation signal and the actual crosstalk signal.

In one exemplary embodiment of the present invention, the crosstalk cancellation device can implement modeling, delay, timing, and/or signal shaping adjustments so the crosstalk cancellation signal closely matches the actual crosstalk, thereby yielding effective crosstalk cancellation. A controller of the crosstalk cancellation device can monitor and analyze the output of the crosstalk cancellation device. That is, a controller can process the crosstalk-cancelled signal, which is an improved communication signal that results from applying the crosstalk cancellation signal to the channel having crosstalk interference. The controller can vary the modeling parameters and the timing delay, individually or in unison, to minimize any residual crosstalk remaining after crosstalk cancellation. Adjusting the operations of the crosstalk cancellation device can compensate for fluctuating conditions and/or variations in the crosstalk effect.

In one exemplary embodiment of the present invention, a crosstalk cancellation device can undergo a calibration or setup procedure that is initiated internally or externally. The crosstalk cancellation device, or another device executing the calibration procedure, can initiate the transmission of a known or predetermined test signal on a communication channel. A test signal can be transmitted on the channel that causes crosstalk or the channel that receives crosstalk interference. Also, one test signal can be transmitted on a channel generating crosstalk, while a different test signal is transmitted on a channel that receives the generated crosstalk interference. For example, a randomized communication signal can propagate on the crosstalk-generating channel, while the crosstalk-receiving channel can have a uniform voltage or current signal that is representative of essentially no data transmission. The crosstalk cancellation device can utilize these known conditions to define the timing and shape of a crosstalk cancellation signal that effectively compensates for crosstalk interference. In other words, the crosstalk cancellation device can define or refine its model of the crosstalk effect based on operating the crosstalk cancellation device with test signals transmitting on the crosstalk-generating and the crosstalk-receiving communication channels.

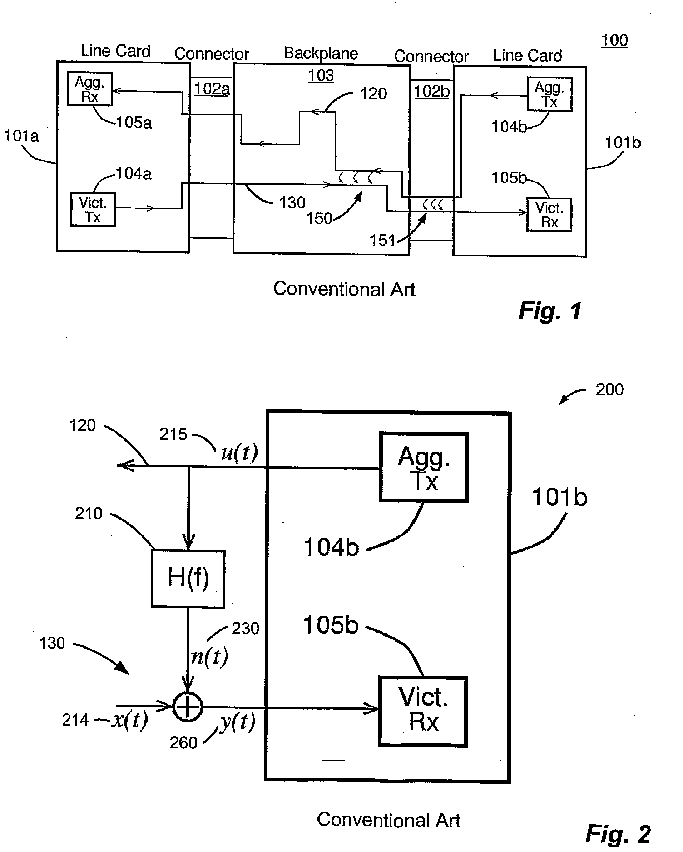

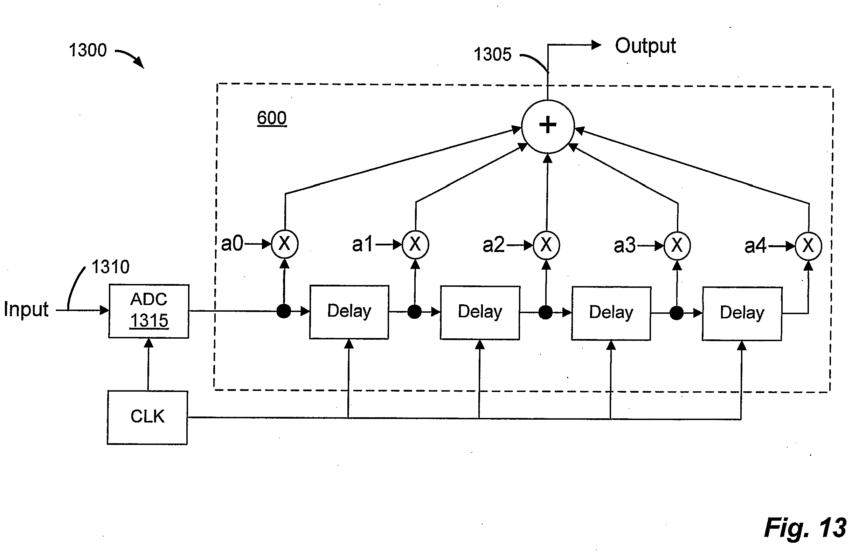

Turning now to discuss each of the drawings presented in Figures 1-30, in which like numerals indicate like elements throughout the several figures, an exemplary embodiment of the present invention will be described in detail. Figures 1-12 generally relate to methods and systems for correcting, canceling, or compensating for communication crosstalk. Figures 13-30 generally relate to modeling, simulating, or emulating signals, signal transformations, and signal effects that may occur in connection with crosstalk (or some other phenomenon). Accordingly, Figures 13-30 provide an exemplary method and system for processing signals in connection with addressing crosstalk. Thus, a crosstalk cancellation device as described herein with reference to Figures 1-12 can comprise technology discussed herein with reference to Figures 13-30.

Turning now to Figure 1, this figure illustrates a functional block diagram of a communication system **100** having two linecards **101a, 101b** communicating over backplane signal paths **120, 130** exhibiting crosstalk **150, 151.** More specifically, Figure 1 illustrates an occurrence of backplane crosstalk **150,** and connector crosstalk **151** in the exemplary case of a backplane communications system **100.**

A linecard **101a, 101b** is a module, typically a circuit board that slides in and out of a chassis slot and provides communication capabilities associated with a communication channel. A backplane **103** is a set of signal paths, such as circuit traces, at the rear of such a chassis that transmit signals between each installed linecard **101a, 101b** and another communication device, such as another linecard **101a, 101b** or a data processing component in a rack-mounted digital communication system.

Each linecard **101a, 101b** in the system **100** illustrated in Figure 1 transmits and receives multiple channels of data, such as the two illustrated channels **120, 130.** An exemplary channel **130:** (i) starts at a transmitter (Tx) **104a** on a linecard **101a;** (ii) transmits off the linecard **101a** through a connector **102a** to the backplane **103;** (iii) continues across the backplane **103** to another connector **102b** and linecard **101b;** and (iv) is received by a receiver (Rx) **105b.** Figure 1 shows two such channels labeled the "victim" or "vict." (from victim transmitter **104a** to victim receiver **105b)** and the "aggressor" or "agg." (from aggressor transmitter **104b** to aggressor receiver **105a).**

When the signal paths **120, 130** are in close proximity to one another, signal energy radiates from the aggressor channel **120** and is incorporated into the victim channel **130.** That is, in areas of the backplane **103** and connectors **102a, 102b** in which a first signal path is located close to a second signal path, a portion of the signal energy propagating in the first signal path can couple into the second signal path and corrupt or impair signals propagating on this second signal path. This crosstalk coupling **150** may occur on a linecard **101a, 101b,** in a connector **102a, 102b,** on a backplane **103,** or any combination thereof, for example.

While not illustrated in Figure 1, crosstalk can also occur in the reverse direction. Specifically, the "victim" channel **130** often radiates energy which corrupts the "aggressor" channel **120.** That is, crosstalk frequently occurs in a bidirectional manner, transferring not only from a first signal path to a second signal path but also from the second signal path to the first signal path. Furthermore, in systems having three or more signal paths coexisting in close proximity to one another (not illustrated), crosstalk can transfer among and between three or more signal paths. That is, a single signal can not only impose crosstalk on two or more other signals, but also receive crosstalk interference from two or more other signals.

Similar to the multi-physical-path case illustrated in Figure 1 and described above, crosstalk can occur with the aggressor and victim channels propagating on a single transmission medium (e.g. a single cable or trace). In this scenario, each channel can correspond to a particular signal band (e.g. a frequency band in frequency division multiplexing system, a spectral band as in an optical wavelength division multiplexing system, or a temporal window in time-division multiplexing system). In other words, two communication channels, one generating crosstalk, one receiving crosstalk, can coexist in a communication medium such as an optical waveguide or a wire, with each communication channel supporting transmission of a dedicated communication signal.

For clarity of explanation, an exemplary embodiment of the present invention based on crosstalk occurring between two channels, each on a separate physical path, is illustrated in Figure 1 and described in detail herein. In another exemplary embodiment of the present invention, a method and system cancels crosstalk occurring between channels coexisting on a single communication medium. One skilled in the art should be able to make and use the present invention in an application having two or more channels exhibiting crosstalk on a single communication medium following the detailed description, flow charts, plots, and functional block diagrams included herein.

Turning now to Figure 2, this figure illustrates a functional block diagram **200** of a crosstalk model **210** for the system **100** illustrated in Figure 1. More specifically, Figure 2 illustrates a model **210** of the crosstalk effect **151** in the connector **102b** based on a single, exemplary transfer function **210.**

The aggressor transmitter **104b** outputs an aggressor communication signal *u(t)* **215** on the aggressor channel **120.** Energy from this aggressor communication signal *u(t)* **215** couples into the victim channel **130** via crosstalk **151** in the connector **102b.** The aggressor communication signal *u(t)* **215** is composed of a spread of frequencies. Since crosstalk **151** is a frequency dependent phenomenon, the frequencies of the aggressor communication signal *u(t)* **215** couple into the victim channel at varying efficiency. The frequency model *H(f)* **210** of the crosstalk effect **151** expresses the extent to which each of these frequency components couples into the victim channel **130** in the form of a signal *n(t)* **230.** This crosstalk signal *n(t)* **230** combines with the unadulterated communication signal *x(t)* **214** propagating on the victim channel **130** from the victim transmitter **104a.** The victim channel **130** transmits the resulting combined signal *y(t)* **260** to the victim receiver **105b.**

The crosstalk transfer function **210** can be characterized by the frequency response *H(f)* **210** (or its time-domain equivalent impulse response *h(t)*). As depicted in Figure 2, the response *H(f)* **210** conveys the transformation that the aggressor data signal *u(t)* **215** experiences in the connector portion of its route from the aggressing transmitter **104b** to the victim receiver **105b.** The specifics of this response **210** usually vary among particular victim-aggressor channel pairs. Nevertheless, the general nature of the response is based on geometric constraints and underlying physics. For example, a backplane connector's crosstalk response **151** can depend upon physical system parameters. The backplane crosstalk **150** can also be modeled with a transfer function, and the backplane and connector crosstalks **150, 151** can even be captured with a single (albeit different) transfer function.

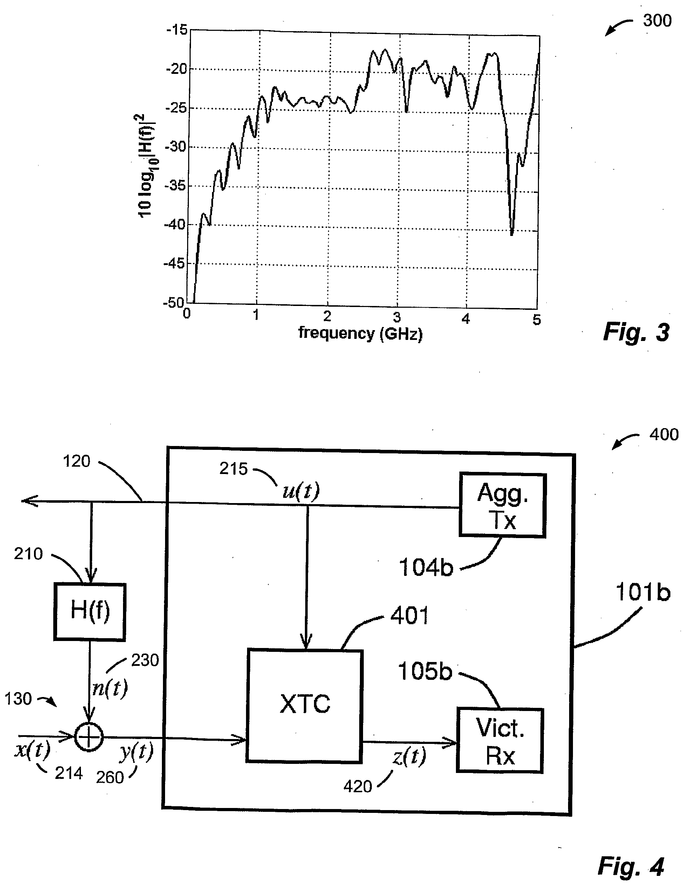

An exemplary, non-limiting embodiment of the present invention, in which a crosstalk cancellation device compensates for crosstalk occurring on a linecard-to-backplane connection will be described below with reference to Figures 3-12B. The embodiments disclosed herein are provided so that this disclosure will be thorough and complete and will convey the scope of the invention to those having ordinary skill in the art. Those skilled in the art will appreciate that the present invention can be applied to address crosstalk occurring on a backplane or other locations in a communication system and that the present invention can compensate for various forms of crosstalk.

Turning now to Figure 3, this figure illustrates a plot **300** of a crosstalk response **210** for a backplane-to-linecard connector **102b** according to an exemplary embodiment of the present invention. This plot **300** illustrates laboratory measurements of the power in the crosstalk signal **151,** more specifically the power transferred from the aggressor channel **120** to the victim channel **130** in the connector **102b,** as a function of frequency. The horizontal axis is frequency measured in units of gigahertz (GHz). The vertical axis describes signal power in decibels ("dB"), more specifically ten times the base-ten logarithm of the crosstalk frequency response **210** squared. Thus, this plot **300** illustrates the level of crosstalk power transferred from one channel **120** to another channel **130** for each frequency component of the aggressor signal *u(t)* **215.**

In connectors **102a, 102b,** the dominant mechanism for crosstalk **151** is typically capacitive coupling between the connector's pins. This mechanism is clearly evident in Figure 3 as the general high-pass nature of the response of the plot **300.** In other words, the plot **300** shows a trend of higher signal frequencies, above about 1 GHz, transferring energy via crosstalk mechanisms **151** more readily than lower frequencies, below 1 GHz. The left side of the plot **300,** less than approximately 1 GHz, exhibits an attenuated crosstalk signal having a power less than approximately -25 dB. Thus, this plot **300** shows that the frequency components less than approximately 1 GHz of a communication signal *u(t)* **215** transfer a relatively small portion of their carried power to a victim channel **130** via connector crosstalk **151.** The magnitude of crosstalk **151** increases between approximately 0.25 GHz and 1 GHz. Thus, based on this plot **300,** the components of a victim communication signal *x(t)* **214** that have frequencies between approximately 1 GHz and 4.25 GHz are particularly prone to crosstalk effects **151** from an aggressor communication signal *u(t)* **215** with similar signal frequencies.

Furthermore, the fluctuations in the frequency response plot **300** at frequencies above 2 GHz illustrate that the crosstalk effect **151** is heavily influenced by other effects than simple capacitive coupling between a pair of pins. In other words, above 2 GHz, the plot **300** deviates from a classical capacitive coupling response, which typically asymptotically (and monotonically) increases with increased frequency. In contrast, the illustrated plot **300** exhibits a pattern of peaks and valleys at higher frequencies, such as a local minimum at approximately 4.6 GHz.

As described above, adequate crosstalk cancellation depends heavily on accurately modeling a system's crosstalk response. Crosstalk cancellation performance is particularly dependent upon model accuracy for frequencies in which the crosstalk effect is strong, namely for frequencies above approximately 1 GHz.

The higher order effects of the aforementioned peaks and valleys in the plot 300 are highly dependent on specific relative geometric relations between the victim signal path **130** and aggressor signal path **120** which are not known *a priori,* in general. In other words, deriving an accurate and sufficient crosstalk model based on geometric or physical analysis of communication paths can be problematic without empirical data or test measurements regarding actual crosstalk impact on a signal.

Stated another way, the plot **300** of Figure 3 illustrates that the higher frequency components of a communication signal **214, 215** are particularly prone to crosstalk **151** and that modeling the crosstalk response **210** for these higher frequency components involves addressing the inherently erratic nature of this high frequency response. Since an accurate model of a system's crosstalk response **210** can provide the basis for adequate crosstalk cancellation, such a model needs to accurately represent these higher-order, erratic response characteristics. While passive circuit analysis does not readily derive a model with requisite accuracy, actual signal responses can serve as a basis for constructing an appropriate model.

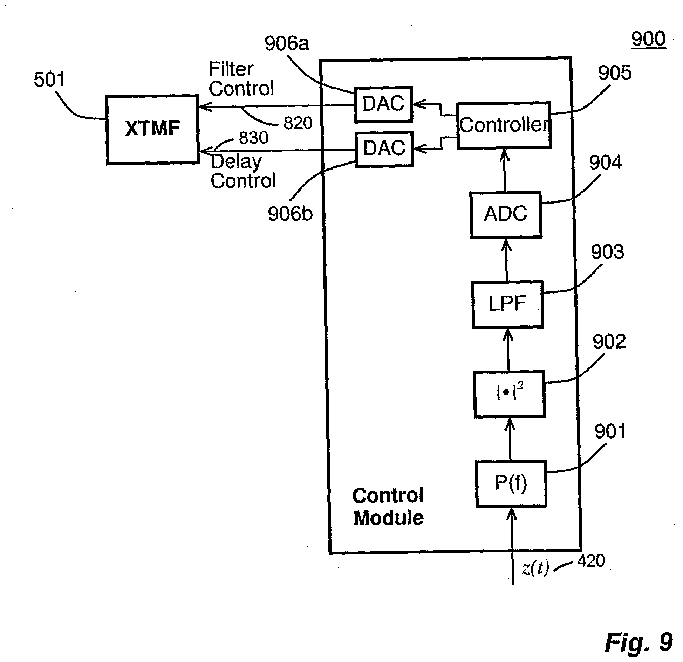

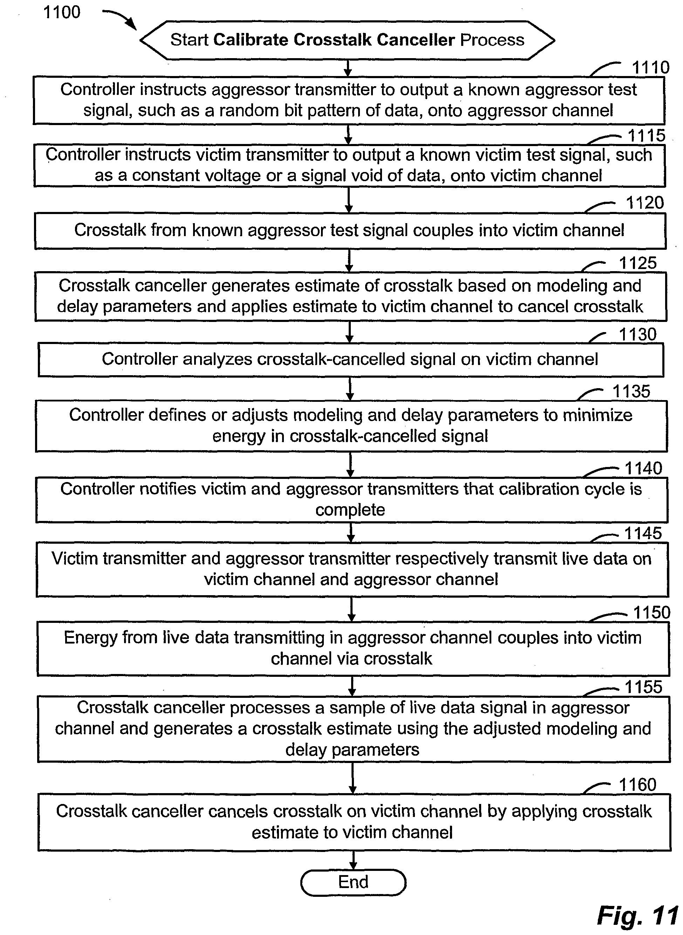

In one exemplary embodiment of the present invention, a crosstalk model in a crosstalk cancellation device can be defined based on crosstalk measurement data such as the measurement data presented in the plot **300** illustrated in Figure 3. As an alternative to acquiring such measurement data in the laboratory, the data can be acquired during field operations, for example by switching a crosstalk cancellation device into a calibration mode as will be discussed below in reference to Figure 9 and Figure 11.

Turning now to Figure 4, this figure illustrates a functional block diagram of a crosstalk cancellation system **400** according to an exemplary embodiment of the present invention. As described above, the present invention can provide crosstalk cancellation in high-speed digital communication systems, such as the communication system **100** illustrated in Figures 1 and 2 and discussed above. More specifically, Figure 4 illustrates a crosstalk cancellation device or crosstalk canceller ("XTC") **401** arranged to cancel crosstalk **151** occurring in a backplane-to-line card connector **101b** as discussed above with reference to Figures 1, 2, 3, and 4.

Digital data *x(t)* **214** propagates in the victim channel **130** for reception by the victim receiver **105b.** The victim channel **130** also carries the unwanted crosstalk signal *n(t)* **230** that is derived from digital data *u(t)* **215** output by the aggressor transmitter **104b** and that is not intended for reception at the victim receiver **105b.** The intended data stream signal *x(t)* **214** and the crosstalk signal *n(t)* **230** additively form the composite signal *y(t)* **260.** The crosstalk canceller **401** receives the composite signal *y(t)* **260,** corrects the crosstalk interference *n(t)* **230** from this signal **260** via cancellation and outputs a corrected signal, *z(t)* **420** for receipt by the victim receiver **105b.** That is, the crosstalk canceller **401** applies an estimate of the actual crosstalk **230** to the signals **260** propagating in the victim channel **130** to effectively cancel the crosstalk signal elements **230** while leaving the desired data signal **214** essentially intact.

The steps that the crosstalk canceller **401** performs include:
(i) accepting as separate inputs *y(t)* **260** (the victim signal corrupted by crosstalk **151)** and a representative portion of *u(t)* **215** (the aggressor signal propagating on the aggressor channel **120** giving rise to the crosstalk signal **230);**
(ii) transforming the transmitted aggressor signal *u(t)* **215** into crosstalk estimates that emulate the signal transformation **210** that actual occurs in the system **200** via the crosstalk effect **151;**
(iii) subtracting the modeled crosstalk from the victim *y(t)* **260** to cancel its crosstalk signal *n(t)* **230** component; and
(iv) outputting the compensated signal *z(t)* **420** to the victim receiver **105b,** which can be a conventional receiver without specific technology for crosstalk compensation.

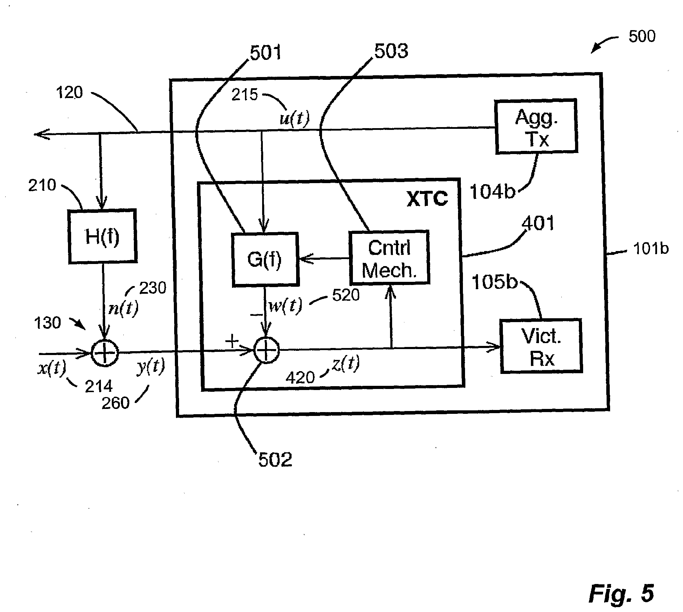

Turning now to Figure 5, this figure illustrates a functional block diagram of a crosstalk cancellation system **500** according to an exemplary embodiment of the present invention. More specifically, Figure 5 illustrates an architectural overview of an exemplary crosstalk canceller **401** that has three functional elements **501, 502, 503,** a crosstalk model **501,** a summation node **502,** and a **503** controller, electronic control "mechanism", or control module. The model **501** generates a crosstalk estimate signal *w(t)* **520,** while the summation node **502** applies this crosstalk estimate **520** to the victim channel **130.** The controller **503** adjusts parameters in the model **501** based on the output *z(t)* **420** of the summation node **502.**

The model **501** emulates the aggressor transfer function *H(f)* **210** in the form of an adjustable frequency response function *G(f)* **501.** That is, the model **501** generates an artificial crosstalk signal *w(t)* **520** that can be a model, simulation, estimate, or emulation of the actual, interfering crosstalk signal *n(t)* **230** caused by electromagnetic coupling in the connector **102b** between the aggressor channel **120** and the victim channel **130.** The model frequency response *G(f)* **501** effectively filters the aggressor data signal *u(t)* **215** in a manner that applies a frequency dependent response similar to the plot **300** illustrated in Figure 3 and discussed above.

Because the same aggressor data stream *u(t)* **215** drives both the actual crosstalk response *H(f)* **210** and the crosstalk canceller' model **501,** the output *w(t)* **520** of the model **510** is, in the ideal case, equal to the aggressor signal component *n(t)* **230.** That is, *G(j)* **501** equals *H(f)* **210** in a theoretical or ideal case in which the environment is noise-free and all system parameters are known and modeled perfectly. Furthermore, in this ideal scenario, the respective output signals *n(t)* **230** and *w(t)* **520** of *H(f)* **210** and *G(f)* **501** would also be equal to one another. In a real-world situation having numerous unknown influences and indeterminate factors, *G(f)* **501** approximates *H(f)* **210** with sufficient precision and accuracy to support essentially error-free communications of high-speed data rates.

The difference node **502** subtracts the emulated aggressor signal *w(t)* **520,** or emulation signal **520,** from the composite signal *y(t)* **260,** thus removing or reducing crosstalk interference from the received victim signal *y(t)* **260.** In a physical implementation functioning in a real-world operating environment, the model *G(f)* **501** does not exactly match the true response *H(f)* **210.** The controller **503** adjusts the model **501** to minimize this error related to inaccuracies between the actual crosstalk effect *H(f)* **210** and the emulated or modeled crosstalk effect *G(f)* **501.**

Implementation of the summation node **502** is usually straightforward to those skilled in the art. However, special attention should be paid to maintain high sensitivity to the two inputs. It is not uncommon for the incurred, and thus the modeled, crosstalk signals **230, 520** to be small in amplitude, especially at high frequencies. While seemingly negligible at first glance, these high frequencies are often amplified via equalization devices (not illustrated). Thus, while the neglected high-frequency crosstalk may be small before equalization, it can be very significant after equalization. The summation node should be implemented to accommodate such high-frequency response.

A portion of the compensated signal *z(t)* **420** (i.e. the output of the difference node **502)** is tapped off and fed to the controller **503,** providing the controller **503** with essentially the same signal **420** that the victim receiver **105b** receives. The controller adjusts the parameters of the modeling filter **501,** characterized by the response *G(f)* **501,** to maximize the goodness-of-fit to the actual response *H(f)* **210.** In particular, the controller **503** takes as input the crosstalk compensated signal *z(t)* **420** and processes, monitors, or analyzes that signal **420** to determine signal fidelity. In other words, the controller **503** evaluates the model's performance by analyzing the extent to which the model's output **520** has cancelled the crosstalk signal **230.** The controller **503** also adjusts the model **501** to enhance crosstalk cancellation and to provide dynamic response to changing conditions.

Because the output of the controller **503** includes parameters of the modeling filter **501,** the controller can adjust the modeled response *G(f)* **420.** Consequently, the controller **503** can manipulate the modeling filter **501** to maximize the fidelity of the compensated signal **420,** i.e. the match between *G(f)* **420** and *H(f)* **210,** by minimizing crosstalk on *z(t)* **420.** Stated another way, the controller **503** monitors the corrected, crosstalk-cancelled signal *z(t)* **420** and dynamically adjusts the crosstalk model *G(f)* **420** to improve the crosstalk cancellation and enhance signal quality. Thus, in one exemplary embodiment of the present invention, a crosstalk cancellation device **401** can include a feedback loop that adapts, self-corrects, or self configures crosstalk cancellation to compensate for modeling errors, fluctuating dynamic conditions, and other effects.

The system illustrated in Figure 5 can be implemented primarily using analog integrated circuitry to provide a relatively low degree of complexity, power consumption, and cost. In one embodiment, the model **501** and difference node **502** are entirely analog. In another embodiment, certain aspects of the model **501** are implemented digitally to exploit the digital nature of the aggressor data source **104b.**

The controller **503** typically includes both analog and digital circuitry. Due to particular aspects of the analog pre-processing in the controller **503,** this digital circuitry can operate at a low speed relative to the communication data rate and thus can facilitate practical implementation. In particular, the digital circuitry can operate at speeds that are orders of magnitude less than the channel baud rate. In one exemplary embodiment of the present invention, a digital circuit in the controller **503** operates at least one order of magnitude below the channel baud rate. In one exemplary embodiment of the present invention, a digital circuit in the controller **503** operates at least two orders of magnitude below the channel baud rate. In one exemplary embodiment of the present invention, a digital circuit in the controller **503** operates at least three orders of magnitude below the channel baud rate. Further details exemplary embodiments of the controller **503** and the model **501** that together yield a low-power and low-cost crosstalk cancellation solution are discussed in more detail below.

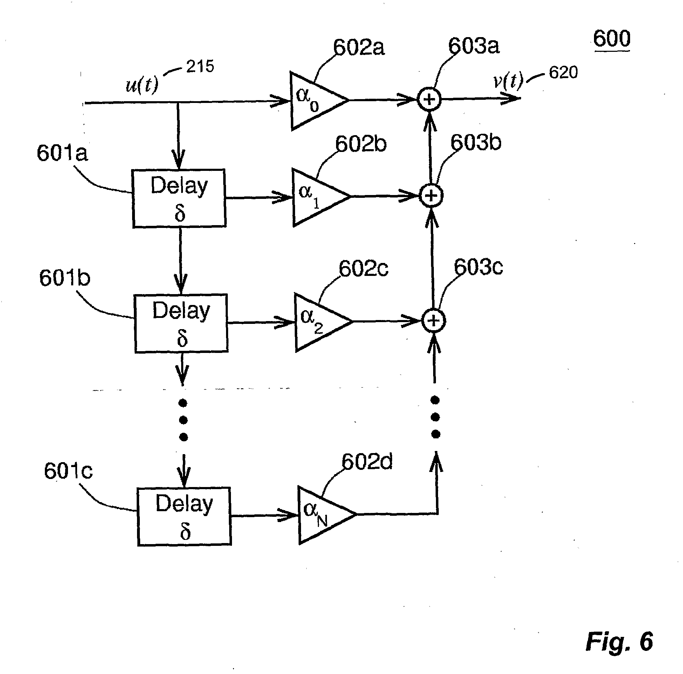

Turning now to Figure 6, this figure is a functional block diagram of a tapped delay line filter **600** according to an exemplary embodiment of the present invention. A tapped delay line filter **600** is a device that generates an output signal **620** from an input signal **215** by delaying the input signal **215** through a series of delay stages **601a, 601b, 601c;** scaling the output of each delay stage **601a, 601b, 601c,** typically with an amplifier **602a, 602b, 602c, 602d;** and adding or otherwise combining these scaled outputs. The tapped delay line filter **600** can be an analog component of the model **501** that generates a signal *v(t)* **620** having a shape or waveform approximating that of the imposed crosstalk signal *n(t)* **230.** That is, the tapped delay line filter **600** can be an exemplary waveform shaper that is implemented via analog components.

As described above, accurately modeling the actual crosstalk response **210** facilitates adequate removal of crosstalk interference **230** via crosstalk cancellation. If a crosstalk cancellation device (not illustrated) were based on an inaccurate crosstalk model (not illustrated) such a device might degrade, rather than improve, signal quality. For example, as a result of an erroneous model, a "correction" signal intended to cancel crosstalk might add interference to a received victim signal while leaving the crosstalk signal that is targeted for cancellation essentially intact. Thus, a crosstalk model, for example based on a filtering mechanism, should have sufficient flexibility to support modeling a variety of crosstalk transfer functions that may be encountered in an application. That is, a flexible crosstalk model is desirable over a rigid model that cannot readily adapt to various applications, operating conditions, and environments, for example.

In one exemplary embodiment of the present invention, as illustrated in Figure 6, an analog tapped delay line filter **600** (also known as transversal filter) with electrically controllable gain coefficients **602a, 602b, 602c, 602d;** models the aggressor crosstalk transfer function **210.** This filter **600** can provide a desirable level of flexibility and adaptability that supports a wide range of operating conditions and situations. More specifically, the tapped delay line filter **600** can generate a waveform approximating the waveform of the crosstalk signal **230** imposed on the victim channel **130.**

The illustrated filter **600** is an exemplary tapped delay line filter with *N* delay elements **601a, 601b, 601c** (each providing time delay *δ* (delta)) and corresponding variable coefficient amplifiers **602a, 602b, 602c, 602d** with coefficients *αₙ* (alphaₙ) for *n*=*0,..,N.* The output *v(t)* **620** of the tapped delay filter **600** can be written as $v \left(t\right) = {α}_{0} u \left(t\right) + {α}_{1} u \left(t-δ\right) + … + {α}_{N} u \left(t-Nδ\right) .$

Changing the values of the gain coefficients α₀, α₁, α₂ ... αₙ (alpha₀, alpha₁, alpha₂ ... alphaₙ) can cause a corresponding change in the response of the filter **600.** The tapped delay line filter **600** can model the aggressor's impulse response for up to *Nδ* (N times delta), that is, up to the temporal span of the filter **600.** Additionally, the frequency content of the aggressor response **210** (as illustrated in Figure 3 and discussed above) can be modeled up to a frequency of *f*=*1*/*(2δ)* (frequency equals the reciprocal of two times delta). Thus, *δ* (delta) should be chosen such that the highest signal frequency of interest in the victim signal *x(t)* **214** is less than *f*=*1*/*(2δ)* (frequency equals the reciprocal of two times delta). Furthermore, *N* should be chosen so that the majority of the aggressor impulse response is contained within a temporal span of *Nδ* (N times delta). Equivalently, the aggressor frequency response **210** should not exhibit large fluctuations below frequencies of *f*=*1*/*(Nδ)* (frequency equals the reciprocal of N times delta). These conditions for selecting *N* and *δ* (delta) contrast with the aggressor signal's conditions. It is not critical if aggressor noise remains above the specified frequency, because a well designed receiver can readily suppress these higher frequencies without degrading victim signal quality.

While a tapped delay line filter **600** can emulate, estimate, or mimic pulse shaping caused by the aggressor response **210,** this filter **600** typically cannot adequately address highly variable temporal delay without an unwieldy number of taps or delay stages. Temporal delay is directly associated with the length of the signal path that spans between (i) the circuit tap that directs a portion of the aggressor data signal *u(t)* **215** to the crosstalk canceller **401** and (ii) the summation node **502** in the crosstalk canceller **401,** as illustrated in Figure 5 and discussed above. More specifically, the modeled temporal delay should closely approximate the temporal delay of the actual crosstalk signal *n(t)* **230** so that the modeled and actual signals **230, 520** are properly synchronized or timed with respect to one another for effective mutual cancellation. While the output **620** of the tapped delay line filter **600** can be directly used as the output *w(t)* **520** of the model **501,** synchronizing the tapped delay line filter's output **620** with the crosstalk signal **230** on the victim channel **130** can enhance crosstalk cancellation, provide heightened signal fidelity to the victim receiver **105b,** and improve overall modeling flexibility.

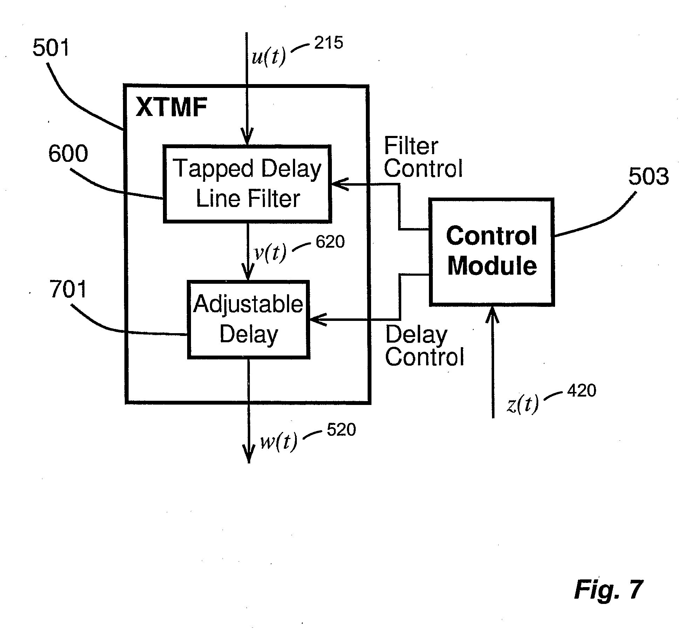

Because the locations of the coupling points of both the actual crosstalk signal **230** and its modeled counterpart **520** can be significantly variable among victim-aggressor pairs, their respective delays can be ill-defined or subject to uncertainty. Even in the relatively simple case of dominant coupling via the backplane-linecard connector **102b,** the signal path length on the linecard **101b** is often variable. Thus, the temporal delay can be difficult to predict without specific knowledge and analysis of linecard layout. To address this uncertainty in temporal delay, an adjustable delay **701** can be incorporated into the cross talk modeling filter **501** as illustrated in Figure 7.

Turning now to Figure 7, this figure is a functional block diagram of a crosstalk modeling filter ("XTMF") **501** of a crosstalk cancellation device **401** with an adjustable delay **701** according to an exemplary embodiment of the present invention. The adjustable delay **701** can either precede or succeed (as shown in Figure 7) the tapped delay line filter **600.** In one exemplary embodiment of the present invention, placing the adjustable delay **701** on the input side of the analog tapped delay line filter **600,** rather than the output side as illustrated, can simplify the implementation. This simplification can result from the discrete nature of the digital signal *u(t)* **215** wherein signal linearity can be readily maintained by quantizing or hard-limiting the output of the delay device **701.** Alternatively, if the adjustable delay **701** follows the tapped delay line filter **600,** in accord with the illustrated configuration, the signal *v(t)* **620** is analog at the input to the adjustable delay **701.** Inputting an analog signal into the adjustable delay **701** can impose a need for a linear response over a broad range of signal values and frequencies, which can be difficult to achieve for large delay values.

While the tapped delay line filter **600** outputs a correction signal *w(t)* **520** that approximates the crosstalk signal *n(t)* **230** undesirably propagating on the victim channel **130** alongside the intended data signal *x(t)* **214,** the adjustable delay **701** synchronizes the waveform of the correction signal **520** with the waveform of the undesirable crosstalk signal **230.** That is, the adjustable delay **701** times or coordinates the correction signal **520** so it temporally matches and is synchronized with the actual crosstalk interference **230.**

Based on the functions of the tapped delay line filter **600** and the adjustable delay **701,** the crosstalk modeling filter **501** outputs a cancellation signal *w(t)* **520** having form and timing accurately matching the actual crosstalk signal *n(t)* **230.** When inserted into or applied to the victim channel **130** via the subtraction node **502,** as illustrated in Figure 5 and discussed above, the cancellation signal *w(t)* **520** negates the actual crosstalk signal **230** and thereby enhances the quality of the communication signal *z(t)* **420** delivered to the victim receiver **105b.**

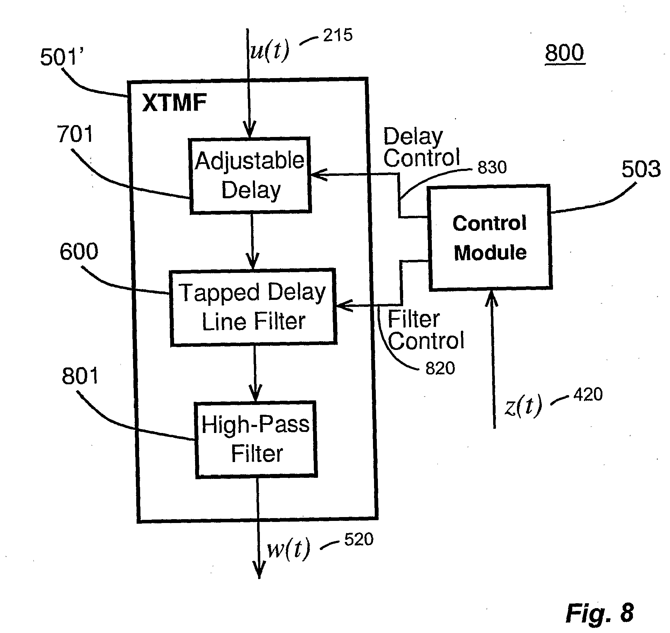

As discussed in further detail above with reference to Figure 5 and below with reference to Figure 8, the controller **503** adjusts the tapped delay line filter **600** and the adjustable delay **701** to fine tune their respective performances and to enhance the fidelity of the corrected signal **420** delivered to the victim receiver **105b.**

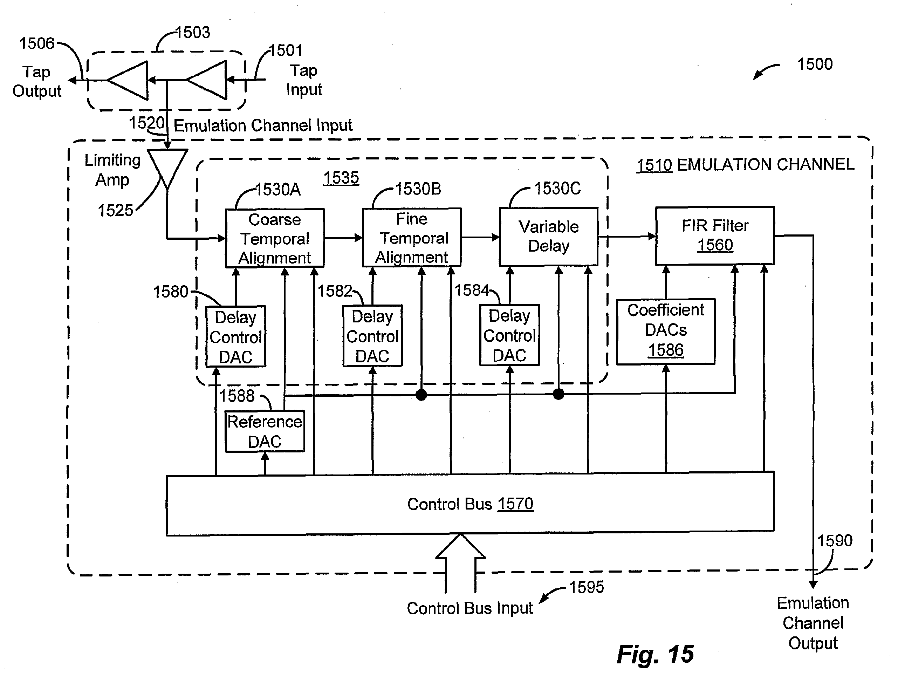

In one exemplary embodiment of the present invention, the circuit **1510** shown in Figure 15 and discussed below is substituted for the crosstalk modeling filter **501.** Thus, the adjustable delay **701** and the tapped delay line filter **600** shown on Figure 7 can respectively comprise the temporal alignment module **1535** and the FIR filter **1560** of Figure 15 as discussed below.

Turning now to Figure 8, this figure is a functional block diagram of a crosstalk modeling filter **501**' of a crosstalk cancellation device **800** with a high-pass filter **801** according to an exemplary embodiment of the present invention. The high-pass filter **801** is typically a fixed or non-adjustable filter. In the configuration of the exemplary embodiment of the illustrated in Figure 8, the adjustable delay **701** feeds the tapped delay line filter **600,** thus offering advantages, as discussed above in reference to Figure 7, for certain applications.

Including the optional high-pass filter **801** in the exemplary crosstalk modeling filter **501**', as illustrated in Figure 7, can enhance performance in some applications or operating environments. A high-pass filter **801** is a device that receives a signal having a range of frequency components, attenuates frequency components below a frequency threshold, and transmits frequency components above the frequency threshold.

While tapped delay line filters **600** have a flexible modeling response over the frequency range $1 / \left(Nδ\right) < f < 1 / \left(2δ\right) ,$ they are often less flexible at lower frequencies such as *f* < *1*/*(Nδ)* (frequencies less than the reciprocal of two times delta). Thus, accurately modeling low-frequencies characteristics of the crosstalk response **210** may require a large number *N* of filter taps that increase filter complexity or may require a longer delay increment *δ* (delta) that reduces high-frequency flexibility. In many applications, it is preferable to avoid such trade-offs. As discussed above with reference to Figure 3, for electrical systems, low-frequency crosstalk characteristics are usually dominated by capacitive coupling effects and can consequently be accurately modeled with a high-pass filter such as a simple first-order resistor-capacitor ("RC") high-pass filter. That is, inserting the high-pass filter **801** into the crosstalk modeling filter **801** can provide a high level of performance without requiring a cumbersome or expensive number of tap filters in the tapped delay line filter **600.**

Similar to the exemplary embodiment of the crosstalk modeling filter **501** depicted in Figure 7, the ordering of the tapped delay line filter **600,** the adjustable delay **701,** and high-pass filter **801** can be permuted to support various arrangements. That is, the present invention supports arranging physical components corresponding to each of the functional blocks **701, 600, 801** illustrated in Figure 8 in any parallel or series configuration that provides acceptable performance for an intended application. Nevertheless, certain configurations or ordering may provide certain advantages or tradeoffs for select application situations as compared to other configurations.

The exemplary inline configuration illustrated in Figure 8 places the adjustable delay **701** on the input side of the tapped delay line filter **600** and the high-pass filter **801** on the output side of the tapped delay line filter **600.** With this ordering, the implementation of the adjustable delay **701** can be simplified by exploiting the discrete-amplitude nature of both its input and output signal. The tapped delay line filter **600** can also exploit, via digital delay elements, the discrete-amplitude input provided from the adjustable delay **701.** In its RC implementation, the high-pass filter **801** is an analog device that does not receive benefit from providing it with a discrete amplitude input. Thus, there is typically no drawback to placing the high-pass filter **801** at the output side of the crosstalk modeling filter **501'** or in another position.

As discussed above with reference to Figure 5, the control module **503** takes as input the crosstalk compensated signal *z(t)* **420** and outputs control signals **820, 830** to adjust the crosstalk response model **501.** The control module's outputs **820, 830** to the crosstalk modeling filter **501** comprises: (i) a "delay control" signal **830** to control the time delay implemented by the adjustable delay component **701;** and (ii) a set of "filter control" signals **820** to control the gains on the variable coefficient amplifiers **602a-d** in the tapped delay line filter **600.** That is, the controller **503** outputs modeling parameters to the tapped delay line filter **600** and timing parameters to the adjustable delay **701.**

These output control values are determined based on observation, processing, and/or analysis of the compensated signal *z(t)* **420.** U.S. Nonprovisional Patent Application Serial No. 10/108,598, entitled "Method and System for Decoding Multilevel Signals" and filed on March 28, 2002, discloses a viable exemplary system and method for assessing signal fidelity. Commonly owned U.S. Nonprovisional Patent Application Serial No. 10/620,477, entitled "Adaptive Noise Filtering and Equalization for Optimal High Speed Multilevel Signal Decoding" and filed on July 15, 2003, discloses a viable exemplary system and method for controlling device parameters of the crosstalk modeling filter **501.** The disclosures of U.S. Patent Application Serial No. 10/108,598 and U.S. Patent Application Serial No. 10/620,477 are hereby fully incorporated by reference. One or more of the crosstalk model **501,** the tapped delay line filter **600,** and the adjustable delay **701** can each be controlled and/or adjusted using a method and/or system disclosed in U.S. Patent Application Serial Number 10/108,598 or U.S. Patent Application Serial Number 10/620,477. The temporal delay adjustment of the adjustable delay **701** can be determined by treating the delay control as a variable that is swept through its entire range of potential values following the disclosure of these patent applications, for example.

Turning now to Figure 9, this figure illustrates an exemplary system **900** for controlling a crosstalk model **501** such as the exemplary crosstalk modeling filter **501**' illustrated in Figure 8 or the exemplary crosstalk modeling filter **501** illustrated in Figure 7 and their associated adjustable delays **701.** More specifically, Figure 9 is a functional block diagram of a control module **900** of a crosstalk cancellation device **401** according to an exemplary embodiment of the present invention. The exemplary controller **900** illustrated in Figure 9 facilitates relatively simple theoretical analysis and implementation and, in that regard, can offer benefit to certain application over the control methods and systems disclosed in U.S. Patent Application Serial Numbers 10/620,477 and U.S. Patent Application Serial Numbers 10/108,598 that are discussed above.

The controller **900** of Figure 9 includes a filter **901,** having a frequency transfer response *P(f)*, that receives the crosstalk-cancelled signal *z(t)* **420** destined for reception by the victim receiver **105b.** Filter **901** can be a spectral weighting filter based on this frequency transfer response. The output of this filter **901** couples to a power detecting or signal squaring device **902,** which provides an output to a low-pass filter **903.** A low-pass filter **903** is a device that receives a signal having a range of frequency components, attenuates frequency components above a frequency threshold, and transmits frequency components below the frequency threshold.

An analog-to-digital converter ("ADC") receives the low-pass filter's output and generates a corresponding digital signal which feeds into the digital controller **905.** The digital controller **905** in turn generates digital control signals for each of the adjustable delay **701** and the tapped delay line filter **600.** Respective digital-to-analog converters ("DACs") **906a, 906b** convert these signals into the analog domain for respective transmission over a delay control line **830** and a filter control line **820.** The analog delay control signal adjusts the adjustable delay **701,** while the analog filter control signal adjusts the tapped delay line filter **600.**

It will be useful to discuss a simple operational example in which crosstalk is imposed on a channel that is in a temporary condition of not carrying data. More specifically, consider a case in which the victim transmitter **104a** does not transmit any data while the aggressing transmitter **104b** is sending data with a broad spectral content or range of signal frequencies, such as pseudo-random or coded pseudo-random data. That is, referring briefly back to Figure 5, the signal *x(t)* **214** is essentially zero, while *u(t)* **215** is a digital data signal having broad analog spectral content resulting from randomly varying digital data patterns. In this case, the signal *y(t)* **260** is simply the incurred aggressor *n(t)* **230,** and the signal *w(t)* **520** is the modeled aggressor. Thus, the signal *z(t)* **420** is actually the modeling error of the cancellation device. In the theoretical and ideal situation of perfect crosstalk cancellation, *z(t)* **420** is zero.

In other words, transmitting an essentially uniform voltage on the victim channel **130** while transmitting signals having a broad range of frequencies on the aggressor channel **120** provides essentially pure crosstalk on the victim channel **130** and *n(t)* **230** equals *y(t)* **260.** If the crosstalk canceller **401** outputs a cancellation signal *w(t)* **520** also equaling the pure crosstalk signal *n(t)* **230,** *z(t)* **420** will have essentially no signal energy. Thus, in this state, signal energy in *z(t)* **420** is indicative of modeling or delay inaccuracies in the crosstalk modeling filter **501.**

The control module **900** can implement this state of transmitting a defined signal on the aggressor channel **120** and transmitting a constant voltage or essentially no data signal on the victim channel **130.** The control module **900** can then adjust the adjustable parameters of the crosstalk modeling filter **501'** to minimize the signal *z(t)* **420** received by the victim receiver **105b,** thereby providing a crosstalk cancellation signal *w(t)* **520** that matches the actual crosstalk signal *n(t)* **230** and further providing a modeled crosstalk response *G(f)* **501** that effectively matches the actual crosstalk response *H(f)* **210.** More generally, the control module **900** cause transmission of defined or known signal patterns on the aggressor channel **120,** the victim channel **130,** or both the aggressor channel **120** and the victim channel **130** to characterize the crosstalk effect **151** and to control, optimize, or adjust crosstalk cancellation or another form of crosstalk compensation. Further, the control module **900** can have a learning or adaptive mode in the form of a setup mode or a self-configuration procedure and can implement automatic or self calibration.

Referring to Figure 9 and generalizing beyond the example of imposing crosstalk on a channel void of data, this error signal *z(t)* **420** can be spectrally weighted with an optional filter **901,** whose response is denoted as *P(f),* to emphasize any higher importance of certain frequencies over others. For example, it may be desired to high-pass filter the error signal *z(t)* **420** to emulate the effect of equalization in the victim receiver **105b.** The (potentially spectral weighted) error signal *z(t)* **420** is then squared or power-detected, i.e. the output of the squaring device **902** is the signal power. The power signal is then passed through a low-pass filter **903** (or integrator) with a relatively low cutoff-frequency to obtain the integrated power, i.e. energy, of the error signal *z(t)* **420.** Thus, the signal at this point corresponds to an analog estimate of the statistical variance (i.e. the square of the standard deviation) of the error signal *z(t)* **420.**

As familiar to those skilled in the art, the error variance is a useful metric for gauging fidelity. Because the cutoff frequency of the low-pass filter **903** is at a very low frequency (typical orders of magnitude below the symbol transmission rate), the variance signal is nearly a constant after the transient effects of any modeling filter changes decay away. Thus, the analog variance signal can be sampled with a simple low-speed high-resolution analog-to-digital converter **904.** The digitized signal output by the analog-to-digital converter **904** provides the error variance information to a simple microprocessor, state machine, finite state machine, digital controller, or similar device (referred to herein as a "digital controller") **905.** After recording the error-variance for the current set of response modeling parameters, the digital controller **905** may then specify a new filter configuration by digitally outputting the new parameters to a set of DACs **906** which provide the corresponding analog signal to the aggressor emulation module **501.**

As the digital controller **905** is able to both (i) set the parameters of the crosstalk modeling filter **501** and (ii) directly observe the effect of the current parameters on the modeling error variance, the digital controller **905** can find a parameter set that maximizes the fit of the aggressor response model **501** to the actual response **210.** Because trial-and-error processing is not overly complicated, all combinations of model parameters can be tested in many instances. However, other empirical search/optimization methodologies known to those skilled in the art may be alternatively employed. In one exemplary embodiment of the present invention, a coordinate-descent approach, as described in U.S. Patent Application No. 10/620,477, discussed above, provides search and optimization to identify acceptable model parameters.

As discussed above, the control module **900** can comprise a combination of analog and digital circuitry to provide a practical control implementation. Filter **901** and power detecting device **902** collectively input and output a high-speed analog signal. The low-pass filter **903** takes as input a high-speed analog signal and outputs a low-speed analog signal. Filter **901,** power detecting device **902,** and low-pass filter **903** collectively take a projection of a high-speed signal onto a low-speed signal by extracting the relevant statistical information from the high-speed signal and presenting it in a more concise form. The ADC **904** takes this low-speed analog signal as an input and outputs a corresponding digitized approximation. Consequently, the controller **905** receives and processes this low-speed digital signal. Because the digital signal is low-speed, the associated processing circuitry is less complex than would be required if the signal was high-speed. The digital controller **905** outputs low-speed digital control signals to the digital-to-analog converters **906a, 906b** which in turn output low-speed analog signals. As a result of tandem simple high-speed analog preprocessing and low-speed digital processing, the control module **900** provides signal analysis based on a powerful statistical characterization and implements a robust control methodology with relatively little circuit complexity, which are factors that can facilitate practical crosstalk cancellation in high-speed communications systems.

While the illustration in Figure 9 employs a power-detecting (or signal squaring) device **902** to generate the error-variance, a full-wave-rectifier (which takes the absolute value of the signal) may be used as an alternative. For an implementation based on a full-wave-rectifier, the output of the low-pass filter **903** will now no longer correspond to error variance, but will nevertheless represent a valid fidelity criterion. In particular, it is the 1-norm of the error signal **420,** and thus the fidelity metric still has suitable mathematical properties. Those skilled in the art appreciate that determining the "1-norm" of a signal typically comprises integrating the absolute value of the control signal. This substitution may be advantageous for certain applications because: (i) the 1-norm signal may have a reduced dynamic range (thus relaxing resolution constraints on the analog-to-digital converter **904);** and (ii) full-wave-rectifiers may be easier to implement than power-detectors. Such modifications are considered within the scope of the present invention.

Similarly, the power detector **902** may also be replaced with a half-wave-rectifier or any like device that is used to assess signal magnitude. It will also be appreciated by those skilled in the art that the division of the crosstalk canceller **401** into functional blocks, modules, and respective sub-modules as illustrated in Figures 5 through 9 are conceptual and do not necessarily indicate hard boundaries of functionality or physical groupings of components. Rather, representation of the exemplary embodiments as illustrations based on functional block diagrams facilitates describing an exemplary embodiment of the present invention. In practice, these modules may be combined, divided, and otherwise repartitioned into other modules without deviating from the scope of the present invention.

In one exemplary embodiment of the present invention, a crosstalk cancellation system is a single integrated circuit ("IC"), such as a monolithic IC. Each of a crosstalk cancellation device, a control module, and a crosstalk modeling filter can also be single ICs. Such ICs can be complementary metal oxide semiconductor ("CMOS") ICs and can be fabricated in a 0.18 micron process, for example.

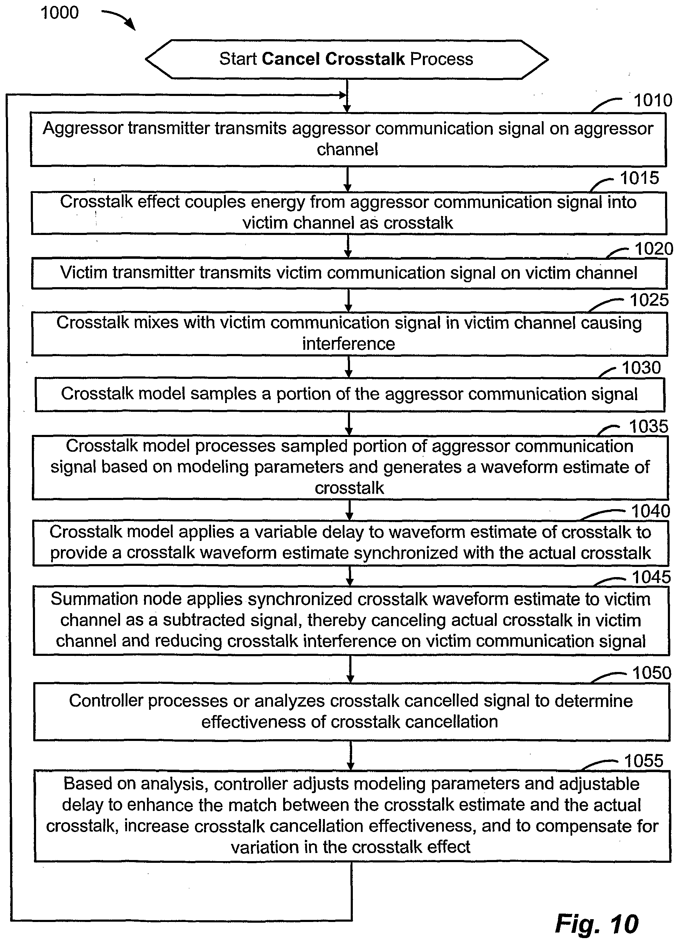

A process for canceling crosstalk and a process for calibrating a crosstalk canceller will now be described with respective reference to Figure 10 and Figure 11. Certain steps in the processes described herein must naturally precede others for the present invention to function as described. However, the present invention is not limited to the order of the steps described if such order or sequence does not alter the functionality of the present invention. That is, it is recognized that some steps may be performed before or after other steps or in parallel with other steps without departing from the scope and spirit of the present invention.

Turning now to Figure 10, this figure is a flow chart illustrating Process **1000,** entitled Cancel Crosstalk, for canceling crosstalk **151** according to an exemplary embodiment of the present invention. At Step **1010,** the first step in Process **1000,** the aggressor transmitter **104b** transmits an aggressor communication signal *u(t)* **215** on the aggressor channel **120.** This communication signal **215** can be an analog or a digital signal carrying data.

At Step **1015,** the crosstalk effect **151** couples energy from the aggressor communication signal *u(t)* **215** into the victim channel **130** as crosstalk *n(t)* **230.** The coupling mechanism can be electromagnetic coupling, as in the exemplary case of electrical data signals propagating on a backplane **103,** or another optical or electrical crosstalk mechanism. The energy transfer of the crosstalk effect **151** generates the crosstalk signal *n(t)* **215** in the victim channel **130** in a manner that results in signal propagation towards the victim receiver **105b.**

At Step **1020,** the victim transmitter **104a** transmits the victim communication signal *x(t)* **214** on the victim channel **130.** The victim communication signal **214** can be either an analog or a digital signal. At Step **1025,** the crosstalk signal *n(t)* **230** coexists or mixes with the victim communication signal *x(t)* **214** in the victim channel **130.** The composite signal *y(t)* **260** results from the combination of these signals **214, 230.**

At Step **1030,** the crosstalk model **501** acquires a sample of the aggressor communication signal *u(t)* **215.** In other words, a tap or other node directs a representative portion of the aggressor communication signal **215** to the crosstalk canceller **401** for reception and processing by the crosstalk model **501.**

At Step **1035,** the crosstalk model **501** processes the sampled portion of the aggressor communication signal *u(t)* **215** via the tapped delay line filter **600.** Modeling parameters, such as the gain or scaling constants of the tapped delay line filter **600,** provide the basis for generating a waveform estimate *v(t)* **620** of the crosstalk signal *n(t)* **215.** More specifically, the coefficients α₀, α₁, α₂ ... αₙ (alpha₀, alpha₁, alpha₂ ... alphaₙ) of the variable coefficient amplifiers **602a, 602b, 602c, 602d** in the tapped delay line filter define a waveform *v(t)* **620** approximating the crosstalk signal **215.**

In one exemplary embodiment, the finite impulse response ("FIR") filter **1560** illustrated in Figure 15 and discussed below generates the waveform estimate of the crosstalk at Step **1035.** Thus, the system **1510** can perform or be involved with one or more of the steps of Process **1000.**

At Step **1040,** the adjustable delay **701** in the crosstalk model **501** applies a time delay to the waveform estimate *v(t)* **620** to synchronize this waveform **620** with the interfering crosstalk signal *n(t)* **230** propagating in the victim channel **130.** At Step **1045,** the summation node **502** of the crosstalk canceller **401** applies the resulting crosstalk cancellation signal *w(t)* **520** to the victim channel **130** and the combined crosstalk and communication signal *y(t)* **260** propagating therein. The crosstalk cancellation signal *w(t)* **520** cancels at least a portion of the crosstalk signal component *w(t)* **520** propagating in the victim channel **130.** Reducing this crosstalk interference **520** improves signal fidelity in the communication signal *z(t)* **420** that is output by the crosstalk canceller **410** for delivery to the victim receiver **105b.**

In one exemplary embodiment, the temporal alignment module **1535** illustrated in Figure 15 applies the variable delay of Step **1040.** Thus, in one exemplary embodiment of Process **1000,** the system **1510** provides a crosstalk estimate for crosstalk cancellation.

At Step **1050,** the controller **503** processes or analyzes the crosstalk compensated signal *z(t)* **420** to determine effectiveness of crosstalk cancellation. In other words, the controller **503** assesses signal fidelity to determine if the crosstalk canceller is applying a crosstalk cancellation signal *w(t)* **520** that accurately matches the actual crosstalk *n(t)* **230,** both in waveform and in timing.

At Step **1055,** the controller **503** adjusts the modeling parameters, specifically the coefficients of the variable coefficient amplifiers **602a, 602b, 602c, 602d** in the tapped delay line filter **600,** to optimize the waveform match between the crosstalk cancellation signal *w(t)* **520** and the actual crosstalk signal *n(t)* **230.** The controller **503** further adjust the variable or adjustable time delay of the adjustable delay **701** to synchronize the crosstalk cancellation signal *w(t)* **520** with the actual crosstalk signal *n(t)* **230.** That is, the controller **503** adjusts the operation of the crosstalk canceller **401** by implementing parameter adjustments to the crosstalk modeling filter **501** to enhance the fidelity of the net communication signal *z(t)* **420** delivered to the victim receiver **105b.**

Following Step **1055,** Process **1000** iterates Steps **1010-1055.** The crosstalk canceller **401** continues canceling crosstalk **230** and implementing adaptive responses to dynamic conditions, thereby providing an ongoing high level of communication signal fidelity.

Turning now to Figure 11, this figure is a flow chart illustrating Process **1100,** entitled Calibrate Crosstalk Canceller, for calibrating a crosstalk cancellation device **401** according to an exemplary embodiment of the present invention. At Step **1110,** the first step in Process **1100,** the controller **503** initiates a calibration sequence. The controller **900** instructs the aggressor transmitter **104b** to output a signal having a known or defined test pattern, for example a random or pseudo random bit pattern of data, onto the aggressor channel **120.** This test or calibration signal can have the format of an aggressor communication signal *u(t)* **215** or can be uniquely formatted for characterizing the crosstalk response *H(f)* **210.** That is, the controller **900** can control transmission of signals having predetermined voltage patterns on the aggressor channel **120.**

At Step **1115,** the controller **900** instructs the victim transmitter **104b** to output a known victim test or reference signal onto the victim channel **130.** The test signal can be a predetermined communication signal or simply a constant voltage, null of data. Sending a known test signal on the victim channel **130** facilitates isolating the crosstalk response *H(f)* **210** from other effects that may generate signal distortion on the victim channel **130.** That is, the controller **900** can control transmission of signals having predetermined voltage patterns on the victim channel **130.**

At Step **1120,** crosstalk *n(t)* **230** from the known aggressor signal *u(t)* **215** couples into the victim channel **130.** With the victim channel **130** carrying a constant voltage as the victim signal *x(t)* **214,** the composite communication and crosstalk signal *y(t)* **260** on the victim channel **130** is essentially the crosstalk signal *n(t)* **230.**

At Step **1125,** the crosstalk canceller **401** generates an estimate *w(t)* **520** of the crosstalk signal *n(t)* **230** for crosstalk cancellation. The crosstalk canceller **401** generates this estimate **520** using modeling and delay parameters that result in a waveform and timing match between the crosstalk signal *n(t)* **230** and the crosstalk cancellation signal *w(t)* **520.** The crosstalk compensator **401** applies the crosstalk estimate **520** to the victim channel **130** and cancels at least a portion of the crosstalk **230** propagating thereon. The resulting crosstalk-cancelled signal *z(t)* **420** propagates to the victim receiver **105b.**

At Step **1130,** the controller **503** processes and analyzes the crosstalk-cancelled signal *z(t)* **420** output by the crosstalk canceller **401.** Based on the analysis, the controller **503** adjusts the modeling and delay parameters to minimize the energy in the crosstalk cancelled signal *z(t)* **420.** That is, the controller **503** varies the operational parameters of the crosstalk canceller **401** towards reducing the residual crosstalk. This control action matches the crosstalk compensation signal *w(t)* **520** with the actual crosstalk *n(t)* **230** imposed on the victim channel **130.**

At Step **1140,** the controller **503** completes the calibration cycle and provides notification to the aggressor and victim transmitters **104a, 104b** that the crosstalk canceller **401** is set to process live data. In response to this notification, at Step **1145** the victim transmitter **104a** and the aggressor transmitter **104b** each transmit live data on their respective channels **130, 120.**

At Step **1150,** crosstalk **230** from live data **215** transmitting on the aggressor channel **120** couples into the victim channel **130.** At Step **1155,** the crosstalk canceller **401** processes a sample of the live data **215** transmitting in the aggressor channel **120** and generates an emulation or estimate **520** of the crosstalk **230** using the modeling and delay parameters defined or updated during calibration.

At Step **1160,** the crosstalk canceller **401** applies the crosstalk estimate **520** to the victim channel **130** for crosstalk cancellation and presents the victim receiver **105** with a high-fidelity signal. Process **1100** ends following Step **1160.** The controller **503** can repeat the calibration procedure at defined or regular time intervals or when the controller's monitoring capability determines that signal fidelity is impaired or as fallen below a threshold.

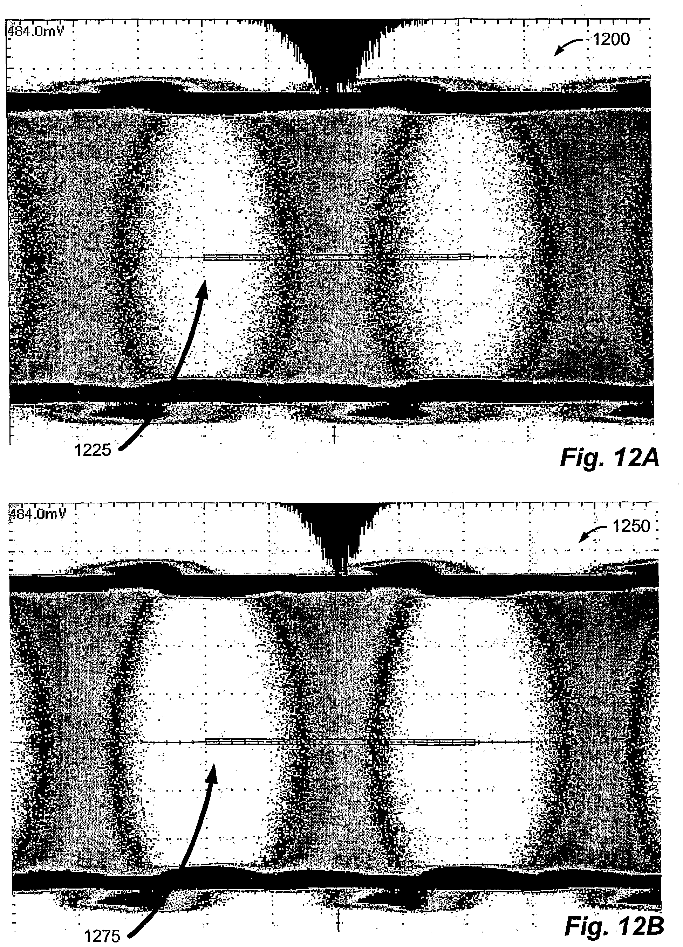

Turning now to Figures 12A and 12B, these figures respectively illustrate testing data of a communication system before and after implementing crosstalk cancellation according to an exemplary embodiment of the present invention. These figures present eye diagrams **1200, 1250** of measured data captured under laboratory conditions. As is well known to those skilled in the art, eye diagrams **1200, 1250** provide a visual indication of signal quality. The level of openness of an "eye" **1225, 1275** in an eye diagram **1200, 1250** correlates with the level of signal quality. That is, a noisy, distorted, or closed eye in an eye diagram typically indicates signal impairment.

Figure 12A is an eye diagram **1200** from a 5 Gigabits per second binary communication system operating under laboratory conditions believed to be representative of field conditions. The victim signal **130** has an amplitude of 800 millivolts, while the aggressor signal **120** has an amplitude of 1,200 millivolts. Figure 12A illustrates the eye diagram **1200** of the received signal **260** after equalization and limiting amplification but without crosstalk compensation. Figure 12B illustrates the eye diagram **1250** of the received signal **420** after application of crosstalk cancellation in accordance with an exemplary embodiment of the present invention followed by equalization and limiting amplification. As with the eye diagram of Figure 12A, the victim signal **130** has an amplitude of 800 millivolts, while the aggressor signal **120** has an amplitude of 1,200 millivolts.

Because the signal path includes a limiting amplifier in both the crosstalk-corrected eye diagram **1250** and the eye diagram **1200** without crosstalk compensation, the thicknesses of the horizontal "eye-lids" at the top and bottom of each eye diagram **1200, 1250** do not provide a useful gauge of signal quality. Rather the signal performance enhancement provided by crosstalk cancellation is evident from the wide open eye **1275** in the crosstalk-corrected eye diagram **1250** relative to the narrow, noisy eye **1225** of the eye diagram **1225** without crosstalk correction.

To further characterize communication performance improvement achieved by crosstalk cancellation in accordance with an exemplary embodiment of the present invention, bit error rate measurements were acquired from this test system under the same test conditions, before and after crosstalk cancellation. Without crosstalk cancellation, the communication system exhibited an average of one bit error for every 100,000 bits transmitted. With crosstalk cancellation, the communication system exhibited an average of one bit error for every 100,000,000,000,000 bits transmitted.

In summary, an exemplary crosstalk cancellation system as been described with reference to Figures 1-12. The crosstalk cancellation system can sample an aggressor signal and can emulate the delay and response of the crosstalk coupling, which often occurs at connectors. This emulated aggressor response can be subtracted from the receive victim signal to produce the corrected victim signal, thereby reducing the level of crosstalk interference and achieving improved jitter and lower bit error rates. In order to provide robust results, the model of the crosstalk effect (the emulated channel response) can be electronically programmable and adaptable to match, and thus remove or cancel, the crosstalk.

The creation of a programmable emulation/modeling channel response at multi-gigabit rates can be less than optimal using standard digital signal processing ("DSP") techniques. Traditional DSP techniques may lack sufficient speed or consume considerable power. Accordingly, a crosstalk cancellation system can comprise a programmable emulation channel or a model that offers performance advantages over conventional DSP processing, for example via analog signal processing, mixed signal processing, or a hybrid approach. Such a high-speed programmable emulation channel can process signals in the analog domain, via analog signal processing, and/or at processing rates that support multi-gigabit data transmission rates, for example.

In other words, analog signal processing (or a hybrid combination of analog and digital signal processing) can provide performance benefits over crosstalk cancellation implemented in an entirely digital environment. As discussed above, in a digital implementation, the accessible aggressing data signals and received victim signals may be digitized (beyond any inherent digitization of the aggressor signal), and a microprocessor can implement the cancellation processes. The analog-to-digital converters and microprocessors typically associated with digital crosstalk cancellation in a high-speed environment can have drawbacks relevant to some applications, such as complexity, cost, or power consumption.

Beyond supporting crosstalk cancellation, a high-speed device that can model, simulate, estimate, or emulate signals, signal transformation, and signal effects can have a wide range of applications. To name a few applications, such a device can be used for generating arbitrary waveforms, for equalization, or as a broad-use FIR filter. Thus, a compact or integrated circuit that emulates signals or signal effects can be used as a high-speed arbitrary waveform generator (for example in test equipment or in a communication device), as a pulse-shaping filter, as an equalizer, etc.

An exemplary high-speed emulation circuit or channel will be described in further detail below with reference to Figures 13-30 in the context of a crosstalk cancellation application. However, that crosstalk application is but one example of many potential applications, is provided for illustrative purposes rather, and is not intended to be restrictive. Accordingly, an emulation circuit or channel according to the disclosure set forth herein can have numerous communication or signal processing applications and uses.

For example, a capability to pulse-shape and/or filter a multi-gigabit signal could be beneficially used in test equipment, to create a very high-speed function generator, or for testing integrated circuits or other communications hardware. As another example, emulating the pre-emphasis, de-emphasis, or equalizer response of a transmitted signal could support accurately characterizing receiver performance. Likewise, an emulation circuit or channel could emulate potential interferers to ascertain receiver performance in the presence of interferers.

The term "emulation circuit" or "emulation channel," as used herein, generally refers to a system that models, simulates, estimates, emulates, represents, describes, or reproduces a signal, a signal transformation, or an effect on a signal. An emulation circuit or an emulation channel can create a simulated crosstalk signal via processing a signal that causes crosstalk. An emulation circuit or channel might receive a signal of short duration, such as a pulse, and transform that received signal into a waveform having a shape or duration that is specified or that is selected.

Turning now to discuss Figures 13-28, Figure 13 illustrates a functional block diagram of an exemplary signal delay device **1300** based on a tapped delay line filter 600 in accordance with an embodiment of the present invention. As discussed above with reference to Figure 6, a tapped delay line filter **600** can process an input signal to produce an output signal **1305** having a desired shape. As illustrated, the tapped delay line filter **600** operates on a digitized version of the input signal **1310** via DSP.

Accordingly, the system **1300** of Figure 13 can represent a DSP implementation of an FIR filter. In such a DSP implementation, the input signal is quantized using an analog-to-digital converter (ADC) **1315,** and is delayed using clocked registers. Mathematical processing performs the multiplication and addition functions associated with implementing the FIR filter **600** from the delayed samples. If the input signal is a digital communication signal, the ADC **1315** digitizes that input signal to a greater number of digital levels than were originally present for conveying information digitally.

While adequate in many situations, the system **1300** may provide a level of speed that is slower than may be desirable for other situations involving multigigabit signal processing. If the input signal **1310** is modulated to convey a high data rate, the ADC **1315** typically should sample faster than the data rate and should have sufficient resolution to provide meaningful data. Such sampling rates and resolutions may be challenging when the data rate of the input **1310** is in the multigigabit range. In addition, the mathematical operations of the tapped delay line filter **600** may lack practicability for multigigabit signals.

As will be discussed in further detail below, for very high speed signals, an implementation based on analog signal processing can often outperform the DSP-based implementation of Figure 13 with regard to speed and power consumption. That is, while the system **1300** can be a component of an emulation circuit or a crosstalk cancellation system, other embodiments that offer generally improved performance for many applications will be discussed below.

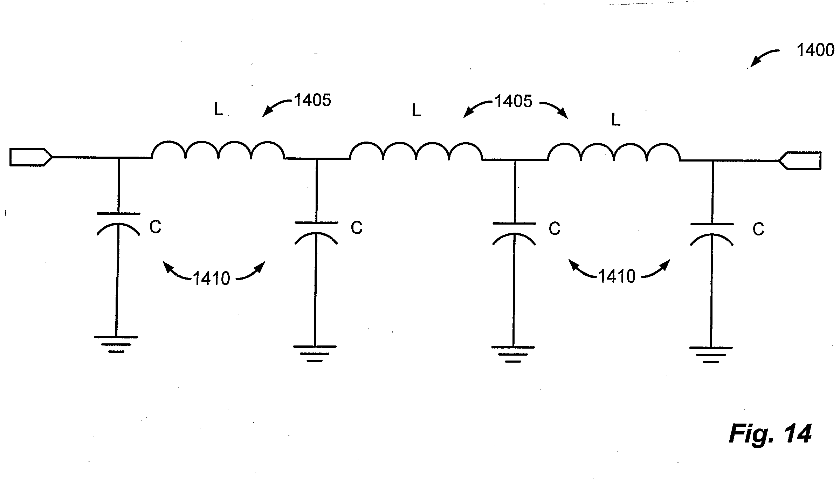

Turning now to Figure 14, this figure illustrates a schematic of an exemplary passive circuit **1400** that simulates a transmission line in accordance with an embodiment of the present invention. More specifically, Figure 14 shows a section **1400** of synthetic transmission line. A purely analog FIR filter can be implemented using a transmission line and/or such a synthetic transmission line **1400** as a delay element. In a synthetic transmission line **1400,** lumped inductors **1405** and capacitors **1410** emulate an ordinary transmission line with characteristic impedance Zo. The following equation describes the characteristic impedance: $Zo = {\left(L/C\right)}^{1 / 2}$

The synthetic transmission line **1400** may occupy less space than an ordinary transmission line. However, as illustrated, the delays are fixed and lack adjustability. The high-frequency losses of integrated transmission lines and synthetic transmission lines **1400** can be substantial at high frequencies, thereby resulting in signal degradation, i.e. an undesired transformation of the signal, thus reducing signal quality. Another issue with this implantation is the relatively large amount of physical space that the delay and filter may occupy.

Accordingly, while the system **1400** can be a component of an emulation circuit or a crosstalk cancellation system, embodiments that offer generally improved performance for many applications will be discussed below.

Turning now to Figure 15, this figure illustrates a functional block diagram of an exemplary circuit **1500 / 1510** for emulating, simulating, or modeling signals, signal effects, or signal transformations in accordance with an embodiment of the present invention. The illustrated system **1510,** which can be characterized as an emulation channel or an emulation circuit, can be an exemplary embodiment of a crosstalk model **501** or a crosstalk modeling filter **501** as discussed above with reference to Figures 1-12. In other words, one exemplary application of the system **1500** and or the system **1510** of Figure 15 is to model crosstalk in connection with canceling crosstalk occurring in a communication system.

Referring now to Figure 15, the system **1500** comprises a tap interface **1503,** an emulation channel **1510,** a control bus **1595,** and an emulation output **1590.** The input to the emulation channel **1510** is a digital signal from the tap **1503.** The tap **1503** intercepts or samples a digital communication signal, typically transmitting over a physical communication medium, and sends a representative thereof to the emulation channel input **1520.** The tap **1503** also sends a representative signal to the tap output **1506.** Accordingly, the tap input **1501,** the tap output **1506,** and the emulation channel input **1520** all transmit replicas of the same digital signal.

In other words, the tap **1503** is a device that extracts a sample of a signal that flows through a path or a channel, such as a backplane of a rack-mounted communication system, or some other conductor. As discussed above, the signal that the tap **1503** samples could be an aggressor communication signal that causes crosstalk on a victim communication signal. Alternatively, the sampled signal could be some other communication signal, or even a signal that is useful for some purpose other than communicating information. While typically digital, the aggressor signal in some embodiments might alternatively comprise an analog communication signal or even a single pulse.

The emulation channel **1510** delays and filters the emulation channel input **1520,** which carries the sample signal, based on control commands from the control bus input **1595.** As discussed above with reference to Figures 5, 8 and 9, among other places, a controller or a control module **503, 900, 905** can send control signals over the control bus **1570** to the emulation channel **1510.** In other words, the control bus **1570** can comprise the signal connections or paths between the emulation channel **1510** and one of the devices **503, 900, 905** discussed above (or some other system) that generates control signals.

As discussed in further detail below, control signals flowing over the control bus **1570** define signal processing parameters of the emulation channel **1510.** Those signal processing parameters specify the transform that the input signal undergoes between the emulation channel input **1520** and the emulation channel output **1590.** More specifically, the control signals specify delay and amplitude parameters of the FIR filter **1560** and the temporal alignment module **1535.**

A limiting amplifier **1525** buffers the emulation channel input **1520** from the communication channel and allows the channel input amplitude to vary without affecting the operation of the emulation channel **1510.** In other words, the limiting amplifier **1525** helps provide isolation between the sampled communication channel and the emulation channel **1510.**

The limiting amplifier **1525** feeds a temporal alignment module **1535** that provides a variable level of time delay. The applied delay can time or synchronize the output of the emulation channel **1510** according to a specification. For example, the temporal alignment module **1535** can delay a simulated crosstalk signal so that the simulated crosstalk is temporally aligned with actual crosstalk. So aligned, the simulated crosstalk can cancel the actual crosstalk when one is subtracted from the other, as discussed in more detail above.

The temporal alignment module **1535** comprises a coarse temporal alignment module **1530A,** a fine temporal alignment module **1530B,** and a variable temporal alignment module **1530C.** As discussed in further detail below, the coarse, fine, and variable temporal alignment modules **1530A, 1530B, 1530C** can be portions, branches, or sections of an integrated circuit, such as an IC chip. While illustrated as comprising three modules **1530A, 1530B, 1530C,** other embodiments may have fewer or more timing components.

The coarse temporal alignment module **1530A** provides selectable delay to within a unit interval. The fine temporal alignment module **1530B** provides selectable delay below a unit interval, further subdividing the overall adjustable delay. The variable delay module **1530C** provides virtually continuous delay adjustment subject to the resolution of the DAC **1584** that controls the variable delay module **1530C.** The variable delay module **1530C** typically provides a level of delay adjustment that is at least greater than that of the fine delay module **1530B.**

The term "unit interval," as used herein, generally refers to a span of time between condition changes of a data transmission signal. Thus, a unit interval could be a minimum time interval between two signal conditions or the period of time that a single bit occupies in the bit stream. For example, a serial line with a baud rate of 2.5 gigabits per second could have a unit interval of 0.4 nanoseconds (1/(2.5 Gb/s)).

The temporal alignment module **1535** feeds the FIR filter **1560** a signal that has been delayed or shifted in time as specified by the control signals transmitting over the control bus **1595.** The FIR filter **1560** filters and pulse-shapes the received signal.

In broad terms, an FIR filter is a signal processing device whose response to an impulse signal ultimately settles to zero. Accordingly, FIR filters are typically stable devices that can operate without feedback. An FIR filter can be viewed as a device that produces an output signal based on a weighted average of delayed versions of an input signal.

The signal processing of the FIR filter **1560** may provide a frequency-dependent signal amplitude so that various frequency components of a signal may have different magnitudes. Output signals thus assume a waveform shape based on frequency-dependent gain. That is, the FIR filter **1560** transforms or shapes an input signal into an output signal based on adjustable signal processing parameters, as discussed in further detail below.

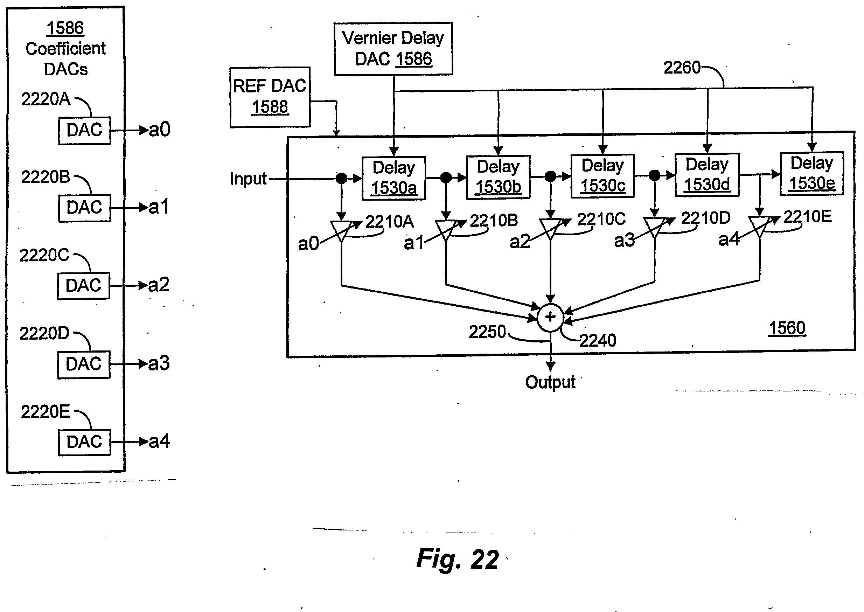

The output of the FIR filter **1560** is the desired emulation channel output **1590.** The control bus **1570** receives digital signals and controls the temporal alignment module **1535** and the FIR filter **1560** through switches and the DACs **1580, 1582, 1584, 1586,** and **1588.** As discussed in further detail below with reference to Figure 22, the DAC module **1586** comprises multiple DACs, one for each FIR tap (or signal processing leg) in the FIR filter **1586.**

The temporal alignment module **1535** and the FIR filter **1560** each comprises delay elements that delay the transmitted signal by a prescribed an amount of time. The temporal alignment module **1535** typically comprises very small, electronically-controllable delays, with step sizes on the order of 0.05 unit intervals. Thus, the temporal alignment module **1535** provides delay with a fine level of time resolution.

The fine time resolution of the temporal alignment module **1535** facilitates precisely aligning the emulated crosstalk signal to the actual crosstalk. As discussed above, such precise alignment helps a crosstalk cancellation system achieve a beneficial level of crosstalk compensation. In contrast, improper temporal alignment might inadvertently add noise, instead of desirably decreasing the noise.

The exemplary embodiment of Figure 15 incorporates differential, adjustable, mixed-signal delays in the temporal alignment module **1535** and the FIR filter 1560, thereby providing high-speed operation, signal fidelity, good performance, and compact size.

The exemplary system **1500** can offer advantages over a DSP-based approach in that quantization of the signals and subsequent processing with mathematical operations can be avoided. As compared to the system **1500,** emulating a signal or a signal transformation via digital signal processing may provide slower speed and higher power consumption. In other words, analog signal processing, as provided by the system **1500** and specifically the system **1510** can perform mathematical operations essentially equivalent to the digital counterparts, but using less power and operating at higher speeds.

Moreover, the illustrated embodiment of Figure 15 offers advantages over a transmission line approach in that the delay modules **1530A, 1530B, 1530C** are asynchronous, mixed-signal delays, and accordingly can be constructed without transmission lines or synthetic transmission lines. Whereas fixed transmission line delays typically lack adjustability, the asynchronous, mixed-signal delays of the system **1500** are electronically adjustable.

Further, the asynchronous, mixed-signal delays of the system **1500** can regenerate or actively boost the signal as it propagates through the temporal alignment module **1535** and the FIR filter **1560,** between the input port **1520** and the output port **1590.** That is, the emulation channel **1510** comprises active delays that can add energy to the processed signal so that the signal remains strong with a robust frequency content.

In contrast, a transmission line approach, as discussed above with reference to Figure 14, may subject signals to cascaded losses, which may eventually render the signal unusable. At longer delays, losses over a real or a simulated transmission line **1400** can accumulate to an unacceptable level. In addition, losses can be more severe at higher frequencies than at lower frequencies. And, in most crosstalk cancellation circumstances, the high frequency signal components best emulate the crosstalk.

In summary, the system **1510** can be viewed as combining the benefits of an analog implementation with certain advantages of a digital signal processing approach. As such, time delay and the FIR filter response can be controlled via electronic means and can be integrated in a compact form. The exemplary system **1510** further provides benefits related to a transmission-line approach in that the system **1510** can operate at fast speed without consuming an excessive level of power.

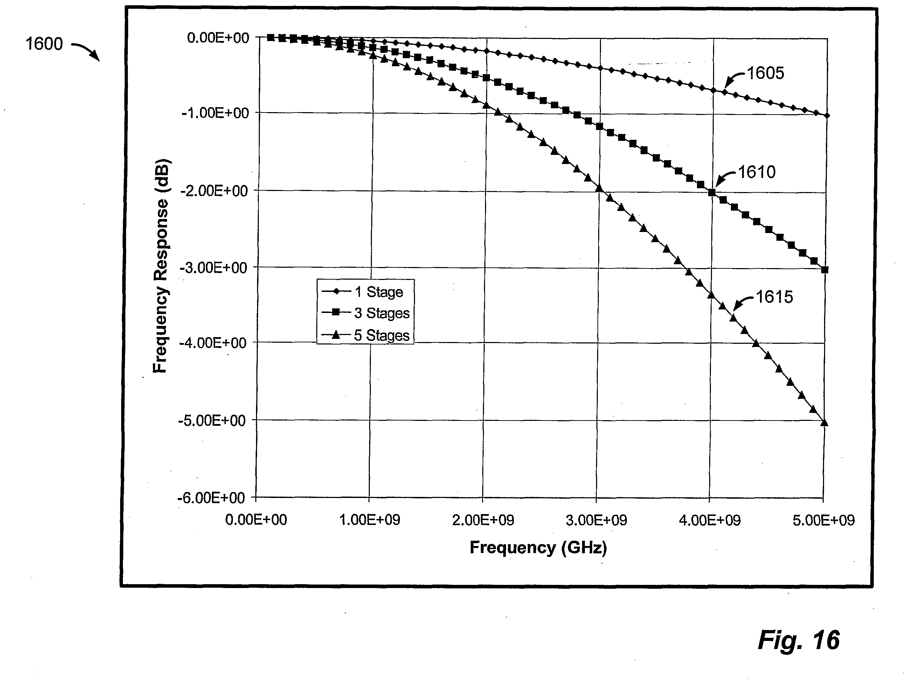

In preparation for discussing the emulation channel **1510** and its components in further detail, it will be useful to briefly review frequency-dependent signal attenuation in signal processing devices. Turning now to Figure 16, this figure illustrates an exemplary plot **1600** of attenuation as a function of frequency for a linear circuit of passive filtering stages that are cascaded together in accordance with an embodiment of the present invention.

In a linear system losses cascade or accumulate. In a passive filtering or delay circuit, each pole created by an RC time-constant will cascade, thereby reducing the usable bandwidth of the signals transmitting through the circuit. The magnitude of the frequency response for a cascade of N circuits, each with a first-order pole having a time constant RC, is given by the following equation: $H \left(ω\right) = {\left(\left(1+{\left(ωRC\right)}^{2}\right)\right)}^{- N / 2}$

The frequency response curves **1605, 1610, 1615** of Figure 16 show how roll-off or high-frequency signal degradation worsens as the number of delay stages increases. The term "roll-off," as used herein, refers to the loss of high-frequency energy in a signal.

That is, a signal passing through a circuit typically comprises multiple frequency components that loose energy or decrease in amplitude as they pass through the filtering circuit. As the sophistication of the filtering or delay circuit (as represented by the number of "poles" or delaying stages) increases, the high-frequency signal components loose energy more rapidly than the low-frequency signal components. Thus, the frequency response plot **1605** of the single-stage circuit is relatively flat, indicating that the high-frequency signal components retain a relatively high level of energy. As indicated by the plot **1610,** the three-stage circuit suppresses a significant amount of high-frequency energy from the signal. Finally, the plot **1615** shows that a five-stage circuit looses an even greater amount of high-frequency signal strength. At 5 GHz, one stage has 1 dB of loss, 3 stages have 3 dB of loss, and 5 stages have 5 dB of loss.

More generally, the roll-off in dB, RdB, at a given frequency increases linearly with the number of stages N according to the following equation: $Rdb = - 20 ⁢ log \left(H\left(ω\right)\right) = Nlog \left({\left(\left(1+{\left(ωRC\right)}^{2}\right)\right)}^{1 / 2}\right)$

In a delay line, the number of stages N corresponds to the amount of delay. As discussed above, roll-off increases with the addition of delay. As a result, the useful frequency of a linear delay line is inversely proportional to the amount of delay desired. In other words, increasing the sophistication of a passive delay line via adding time delay can result in undesirably attenuating the high-frequency signal components. That high-frequency attenuation can limit the circuit's capabilities for processing high-speed signals or for emulating signal effects, such as crosstalk, that involve high-frequency signal components.

The above-described high-frequency degradation can present problems in integrated circuits where transmission lines and synthetic transmission lines are very lossy. As a result, such transmission lines may not be well suited to providing significant delays, for example on the order of 1 nanosecond ("ns") for a 5 Gigabits per second ("Gbs") signal.

However, active circuit technology can overcome this roll-off problem. As will be discussed in further detail below, the emulation channel **1510** can beneficially comprise active circuit technology to boost high-frequency signal strength.

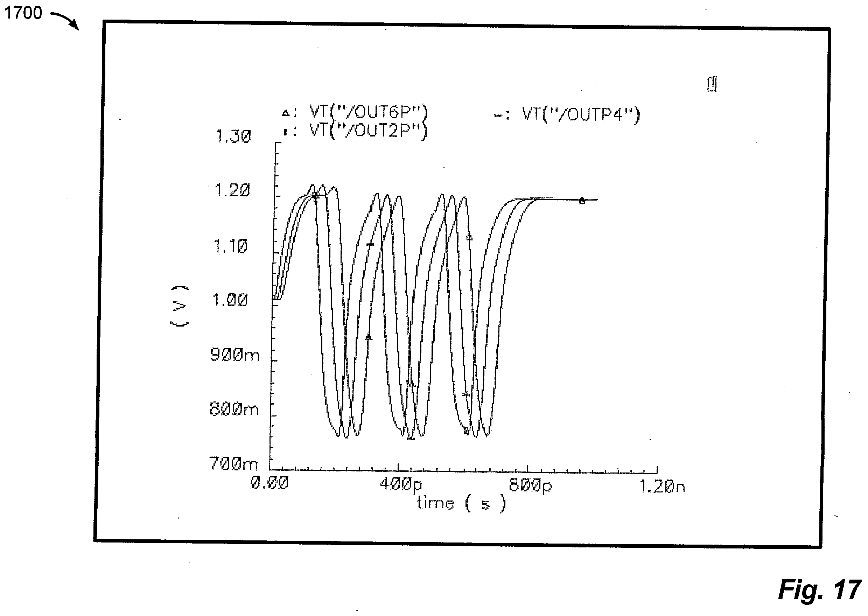

Turning now to Figure 17, this figure illustrates an exemplary plot **1700** of signal amplitude as a function of time for a circuit based on active stages that are connected in series in accordance with an embodiment of the present invention. Figure 17 shows how active circuits that operate in a limiting fashion can overcome the frequency roll-off issue discussed above with reference to Figure 16. More specifically, those active circuits can regenerate a signal without significant loss of high-frequency amplitude or degradation of frequency bandwidth.

Referring to Figure 17, the plots **1700** show the propagation of a signal through a series of limiting amplifiers. At each stage, the signal decays from about 1.2 volts to about 0.75 volts and then is amplified back to about 1.2 volts. Consequently, the signal amplitude at the output of the sixth amplifier is essentially the same as the signal amplitude output from the second amplifier. Provided that the input amplitude is sufficient to limit the output response, the signal essentially regenerates as it propagates through the series of amplifiers.

In an exemplary embodiment, the temporal alignment module **1535** and the FIR filter **1560** of the emulation channel **1510** each comprises differential mixed-signal delays that are electronically adjustable and that comprise active delay lines. This principle is effective when the input signal is a pulse that causes the mixed-signal delays to limit.

The emulation channel **1510** applies analog processing that comprises linear circuits in the later stages of signal processing, towards the output **1590.** Specifically, the elements that can exhibit roll-off are the tap-weighting amplifiers **2210A-E** and the summation node **2240** of the FIR filter **1560,** which are discussed in further detail below with reference to Figure 22. By using limiting, mixed-signal delays in the front end (towards the input **1520)** and the linear analog signal processing at the backend (towards the output **1590),** the high-speed, adjustable delays **1530A, 1530B, 1530C** and the FIR filter **1560** can have a compact integrated-circuit form. Moreover, the emulation channel **1510** can exhibit desirable frequency response and can deliver high-fidelity signals.

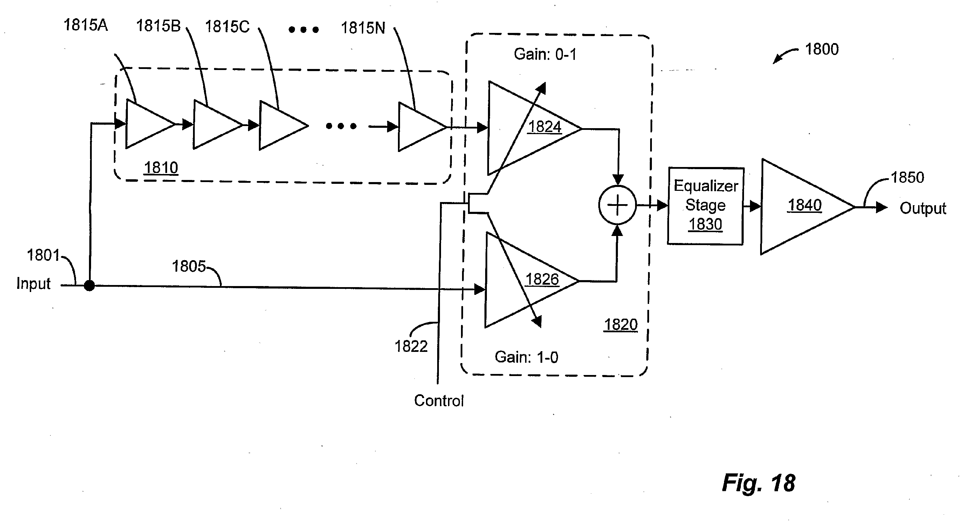

Turning now to Figure 18, this figure illustrates a functional block diagram of an exemplary circuit **1800** for controllably delaying an input signal in accordance with an embodiment of the present invention. That is, a block diagram of an electronically adjustable, mixed-signal delay is shown in Figure 18. In an exemplary embodiment, the temporal alignment modules **1530A, 1530B, 1530C** of Figure 15, discussed above, each comprises at least one of the circuits **1800.** When each temporal alignment module **1530A, 1530B, 1530C** comprises two or more of the circuits **1800,** those circuits **1800** are typically coupled to one another in a serial arrangement so that delay is additive.

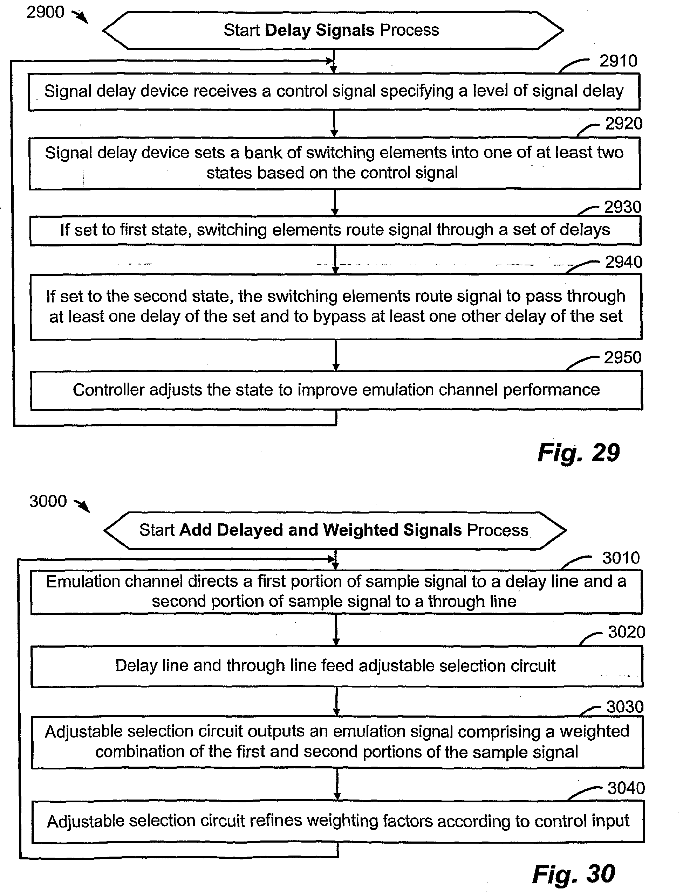

In one exemplary embodiment, the circuit **1800** provides a capability for signal shaping as discussed below. The circuit **1800** may function in association with a signal processing method, for example via Process **3000** as illustrated in Figure 30 and discussed below.

The input signal **1801** splits into two branches, one corresponds to a thru path **1805** and the other corresponds to a maximum delay path **1810.** The adjustable selection circuit **1820** adds the signal from the thru path **1805** to the delayed signal from the maximum delay path **1810.** The adjustable selection circuit **1820** performs this addition via a complementary weighting derived from a control signal on the control line **1822.**

The control signal **1822** can increase weighting of the maximum delay path **1810,** while simultaneously decreasing weighting of the thru path **1805,** and vice versa. Alternatively, the adjustable selection circuit **1820,** under the control of the control signal **1822,** can decrease the contribution of the maximum delay path **1810** while increasing the contribution of the thru path **1805.** That is, the adjustable selection circuit **1820** varies the gains of the amplifiers **1824, 1826** in a coordinated manner, decreasing one gain if the other increases, and vice versa. Thus, the system **1800** uses differential amplifiers **1824, 1826** and current steering to implement a weighted addition of two signals, one delayed in comparison to the other.

Adding the appropriately-scaled delayed and thru signals creates an output signal that has a delay between the thru delay and the maximum delay. In other words, the signal that the adjustable selection circuit **1820** outputs has a delay that is greater than or equal to the delay of the thru path **1805** and that is less than or equal to the delay of the delay path **1810.**

The resulting additive signal can go through an optional equalizer section **1830** to compensate for roll-off incurred during propagation through the maximum delay path **1810.** As discussed above with reference to Figure 17, compensating for roll-off avoids accumulating high-frequency losses through multiple delay stages.

A driver stage **1840** provides limiting action that squares the signal and preserves the rise time. That stage **1840** comprises an amplifier that produces an output level sufficient to drive the next stage into a limiting condition. In other words, the equalizer stage **1830** and the driver stage **1840** can prepare the output signal of the coarse temporal alignment module **1530A** for subsequent processing by the downstream fine temporal alignment module **1530B.**

The delays of the coarse temporal alignment **1530A,** fine temporal alignment **1530B,** and variable delay **1530C** can each be based on the block diagram of Figure 18. The differences are the number of delay stages **1815A, 1815B, 1815C** ... **1815N** used to determine the delay of the maximum delay path **1810.** In other words, the coarse temporal alignment module **1530A** would typically have more delay stages **1815A, 1815B, 1815C** ... **1815N** than the fine temporal alignment module **1530B.**

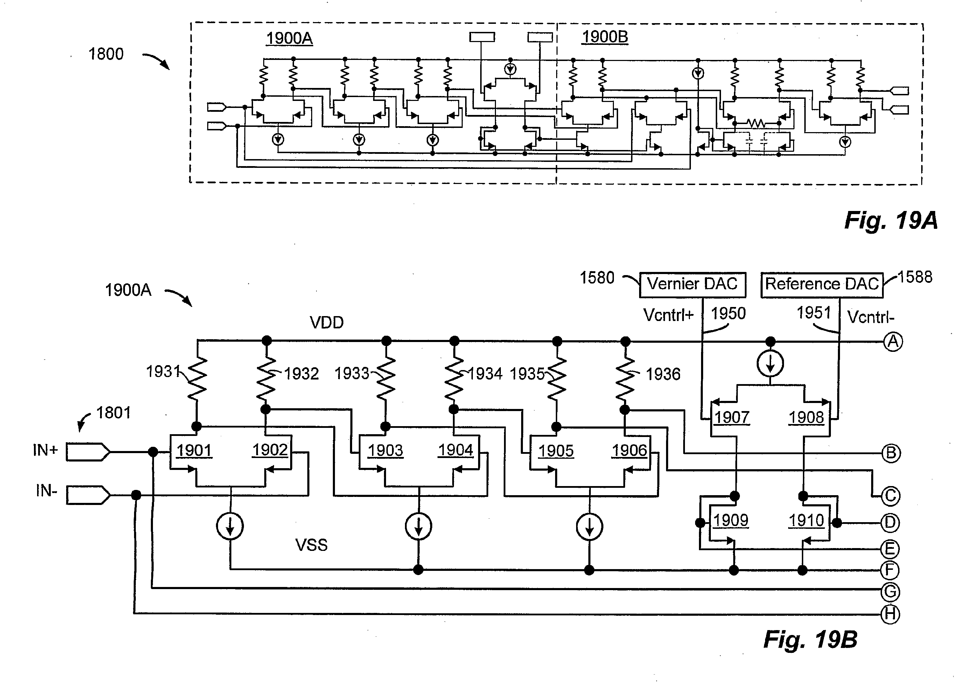

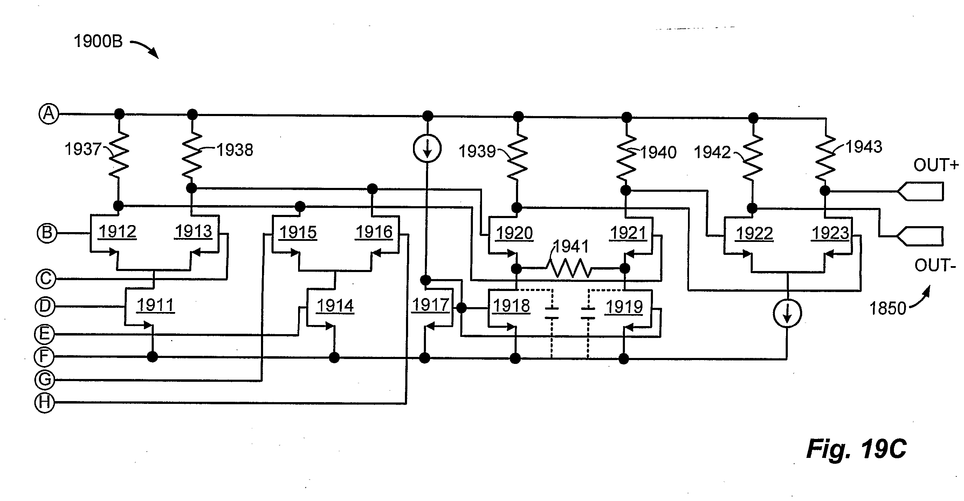

Turning now to Figure 19, this figure illustrates a schematic of an exemplary circuit **1800** for controllably delaying an input signal in accordance with an embodiment of the present invention. More specifically, Figure 19 illustrates an exemplary, transistor-level implementation of the circuit **1800** that Figure 18 depicts in block diagram format, as discussed above.

Figure 19A provides a high-level view of the circuit **1800.** The circuit schematic has been cut into two arbitrary sections **1900A, 1900B** solely for the purposes of illustration. Figures 19B and 19C respectively illustrate those two viewing sections **1900A, 1900B.**

The differential inputs **1801** are labeled "IN+" and "IN-". The differential amplifiers **1815A, 1815B, 1815C** have been created using transistors **1901, 1902, 1903, 1904, 1905,** and **1906** to provide the maximum delay path **1810.** For the purposes of illustration, Figure 19 shows three amplifiers that respectively function as the elements **1815A, 1815B, 1815C,** illustrated in Figure 18 and discussed above. However as discussed above, the number of amplifiers is variable and could range from one to five, eight, ten, fifteen, twenty, or more. More specifically, the delay element **1815A** of Figure 18 comprises the transistor **1901** and the transistor **1902.** Meanwhile, the delay element **1815B** comprises the transistor **1903** and the transistor **1904.**

Optional capacitors can be added in the loads of each delay amplifier to increase delay. At high speeds, the natural parasitic capacitance is generally sufficient, and advantages may be realized from an area perspective by omitting such supplemental capacitors.

Transistors **1911, 1912, 1913, 1914, 1915,** and **1916** form the adjustable selection circuit **1820** with outputs at the resistor **1937** and the resistor **1938.** That is, in an exemplary embodiment, the element **1820** of Figure 18 comprises the transistors **1911, 1912, 1913, 1914, 1915,** and **1916** of Figure 19.

The current steering device (of the adjustable selection circuit **1820)** that provides the adjustable selection is a differential amplifier that comprises the transistors **1907,** 1908, **1909**, and **1910.** That is, the transistors **1907, 1908, 1909,** and **1910** partition the complementary gains between the amplifier **1824** and the amplifier **1826.**

The control lines **1950** and **1951,** respectively labeled "Vcntrl+" and "Vcntrl-", connect to two DACs, a reference DAC **1588** and the vernier DAC **1580.** In an exemplary embodiment, the reference DAC **1588** and the vernier DAC **1580** are essentially identically copies of one another. The labeling of the vernier DAC as **"1580"** assumes that the circuit **1530** of Figure 19 is an implementation of a portion of the coarse temporal alignment module **1530A** discussed above. Interfaced to the fine temporal alignment module **1530B** in an exemplary embodiment, the vernier DAC label could be **"1582."**

The optional equalizer section **1830** is a differential amplifier comprised of the transistors **1917, 1918, 1919, 1920,** and **1921;** the resistance **1941;** and the load resistors **1939** and **1940.** The element **1941** can be considered a degeneration resistor and as a part of the frequency response shaping that creates an equalizing function.

The equalizer section **1830** provides a boosting function with a zero as set forth by the following equation (in which "Cz" is the parasitic capacitance associated with the transistors **1918** and **1919** and "Rz" is the resistance **1941):** $ω = 2 / \left(Rz*Cz\right) .$

As illustrated in the schematic of Figure 19C via dotted lines, more shunt capacitance can be added across the transistors **1918** and **1919** if desired. At high speeds, the parasitic capacitance is typically sufficient and the added capacitance can usually be eliminated from the circuit.

In an exemplary embodiment, the output driver **1840** comprises the transistors **1922** and **1923.** As discussed above, the output driver **1840** and the equalizer **1830** help assure the output signal has sufficient amplitude and acceptable rise time. The output driver **1840** and the equalizer **1830** can be eliminated from the circuit **1800** if the amplitude and rise time out of the adjustable selection circuit **1820** are sufficient.

The exemplary circuit embodiment **1800** of Figure 19 typically employs MOS/CMOS transistors. However, bipolar transistors can used in an alternate embodiment. While the illustrated embodiment comprises loading resistors, other exemplary circuit embodiments can comprise active loads or a parallel combination of active and passive loads.

As discussed above, the adjustable selection circuit **1820,** which can be characterized as a current steering device, is controlled by the two DACs, **1580** and **1588,** that are connected to the same reference voltages. Using a common reference voltage provides a high degree of noise immunity and process tolerance to the control circuitry.

The large common-mode rejection of the current steering device **1820,** coupled with the differential DAC topology, rejects the common-mode noise that might be present on the voltage supply lines or the reference lines. Circuit simulations can verify or help analyze such noise rejection. The differential DAC topology also provides an electronically programmable vernier for the delays.

The same reference DAC **1588** can provide input to the coarse temporal alignment module **1530A,** the fine temporal alignment module **1530B,** the variable delay module **1530C,** and the delays of the FIR filter **1560.** Meanwhile, each set of these delay devices **1530A, 1530B, 1530C, 1560** can have a dedicated vernier DAC **1580, 1582, 1584, 1586** to electronically trim the delay for optimal performance for different applications or to compensate for process, voltage, or temperature variation. In other words, the vernier DACs **1580, 1582, 1584, 1586** make dynamic timing adjustments in response to changing conditions, such as noise variations. The FIR delay vernier **1586** is particularly useful in accommodating different data rates, since FIR delay is typically tuned to an integer fraction (e.g. 1 or ½) of a unit interval in a crosstalk cancellation system.

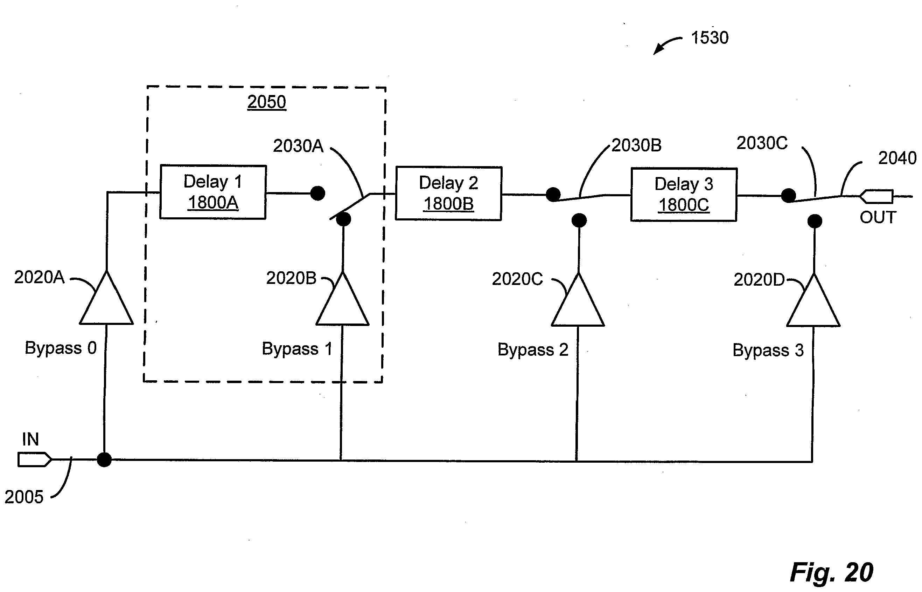

Turning now to Figure 20, this figure illustrates a functional block diagram of an exemplary circuit **1530** for controlling signal delay in accordance with an embodiment of the present invention. In an exemplary implementation, the coarse temporal alignment module **1530A,** the fine temporal alignment module **1530B,** and the variable delay module **1530C** of Figure 15 can each comprise the circuit **1530** that Figure 20 illustrates in block diagram form.

As discussed in further detail below, the circuit **1530** selects the number of operational delay elements **1800A, 1800B, 1800C** that are providing signal delay at any given time in the coarse and fine temporal alignment modules **1530A, 1530B.** While Figure 20 illustrates three active delay elements **1800A, 1800B, 1800C,** the actual number can be as few as two or might be some larger number such as five, ten, fifteen, etc. Figures 18 and 19 illustrate, as a block diagram and as a circuit schematic, an exemplary embodiment of each of the three active delay elements **1800A, 1800B, 1800C** shown in Figure 20.

Thus, in an exemplary embodiment, the block diagram of Figure 20 could describe the fine temporal alignment module **1530B** of Figure 15. Meanwhile, the block diagram **1800** of Figure 18 describes an exemplary embodiment of one of the three delays **1800A, 1800B, 1800C** of Figure 20.

Moreover, the block diagram of Figure 20 can be viewed as describing a delay operation or a timing capability of the emulation channel **1510.** A process **2900** associated with the system **1530** of Figure 20 will be discussed in further detail below with reference to Figure 29.

The input signal **2005** feeds the bypass amplifiers **2020A, 2020B, 2020C, 2020D** in parallel. The switches **2030A, 2030B** determine whether the delay elements **1800B, 1800C** will receive input from a preceding delay element **1800A, 1800B** or from an associated bypass amplifier **2020B, 2020C.**

For example, switch **2030B** selects the output of bypass amplifier **2020B** or the output of the delay element **1800A.** In an exemplary embodiment, exactly one of the bypass amplifiers **2020A, 2020B, 2020C, 2020D** is enabled at any one time. Thus, the amplifiers **2020A, 2020B, 2020C, 2020D** and the associated switching devices **2030A, 2030B, 2030C,** which are typically solid state transistor elements, can be viewed as a bank or a set of signal routing elements.

The emulation channel turns off, deactivates, or removes power from any delay element **1800A, 1800B, 1800C** that is not actively in a state of delaying the input signal. Turning off the delay elements **1800A, 1800B, 1800C** in such conditions not only reduces power consumption, but also helps create the switches **2030A, 2030B, 2030C, 2030D.**

The following table provides an exemplary scheme for selecting and controlling the level of time delay. More specifically, this table depicts which delay elements **1800A, 1800B, 1800C** are enabled for specific bypass amplifier and delay settings.

| **Bypass Status** | | | | |
|---|---|---|---|---|
| **ON** | **Off** | **Delay 1** | **Delay 2** | **Delay 3** |
| 0 | 1, 2, 3 | ON | ON | ON |
| 1 | 0, 2, 3 | OFF | ON | ON |
| 2 | 0, 1, 3 | OFF | OFF | ON |
| 3 | 0, 1, 2 | OFF | OFF | OFF |

For maximum delay, all the delay elements **1800A, 1800B, 1800C** are active and the bypass amplifiers **2020B, 2020C,** and **2020D** are not active, while the amplifier **2020A** feeds delay **2010A.** In this scenario, the signal propagates in series through each of the delay elements **1800A, 1800B, 1800C.**

For minimum delay, bypass amplifier 3 **2020D** is selected, and all the delay elements **1800A, 1800B, 1800C** are turned off. In this scenario, the signal bypasses or flows around all three delay elements **1800A, 1800B, 1800C.**

In one exemplary embodiment, the bypass amplifier **2020A** between the input **2005** and the first delay element **2010** can be eliminated. However, such elimination will result in the incremental signal delays having unequal time delays. The incremental signal delay is typically the composite delay of the bypass amplifier and its associated delay element.

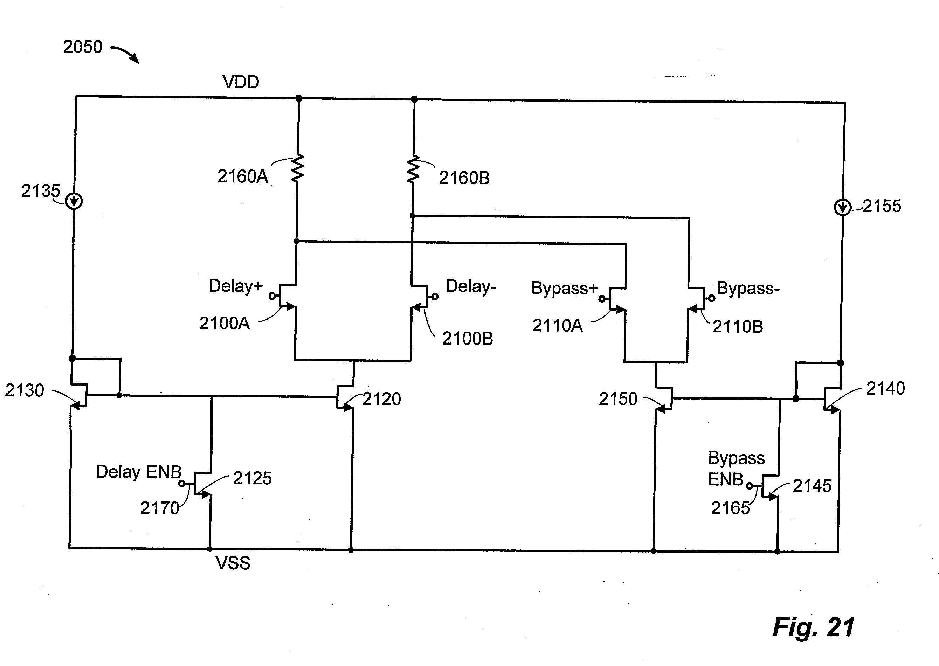

Turning now to Figure 21, this figure illustrates a schematic of an exemplary circuit **2050** for controlling signal delay in accordance with an embodiment of the present invention. More specifically, Figure 21 shows an exemplary transistor-level implementation of the switching capability discussed above with reference to Figure 20 for one of the delay elements **1800A, 1800B, 1800C** and an associated one of the bypass amplifiers **2020A, 2020B, 2020C, 2020D.**

For discussion purposes, the circuit **2050** will be discussed with reference to the delay-1 element **1800A** and the associated bypass-1 amplifier **2020B.** The bypass amplifier **2020B** works in conjunction with the delay element **1800A** to select or to bypass the delay element **1800A.**

The circuit ports **2100A** and **2100B** provide an interface to the delay element **1800A.** The circuit ports **2110A** and **2110B** provide an interface to the bypass amplifier **2020B.** Meanwhile, the ports **2165** and **2175** receive enable signals, respectively for the delay element **1800A** and the bypass amplifier **2020B.**

Common loads **2160A** and **2160B** are shared between the delay element **1800A** and the corresponding bypass amplifier **2020B.** Transistors **2100A** and **2100B** represent the differential output of the delay element **1800A.**

The transistors **2120** and **2130** form the current mirror for current source **2135.** The transistors **2110A** and **2110B** represent or provide the function of the differential bypass amplifier **2020B.** The transistors **2140** and **2150** are the current mirror for the current source **2155.**

To enable the delay **1800A** and disable the bypass amplifier **2020B,** the transistor **2125** should be turned off by a low voltage on the port **2170,** and transistor **2145** should be turned on with a high voltage on the port **2165.** Turning off the low voltage on the port **2170** results in current flowing through the transistors **2100A** and **2100B.** Applying a high voltage on the port **2165** pulls down the current mirror voltage to the transistor **2140,** which will turn off the transistors **2110A** and **2110B.**

To enable the bypass amplifier **2020B** and disable the delay element **1800A,** a high voltage is applied to the port **2170** and a low voltage is applied to the port **2165.** This method of using current-mode switching to select the delay path generally offers superior performance and bandwidth as compared to using MOS switches as the bypass elements.

Turning now to Figure 22, this figure illustrates a schematic of an exemplary finite impulse response (FIR) filter **1560** according to an exemplary embodiment of the present invention. More specifically, Figure 22 provides an exemplary embodiment of the FIR filter **1560,** discussed above, based on mixed-signal delays, also discussed above.

While a 5-tap FIR filter 1560 is shown, the number of taps can be varied according to application parameters. The mixed-signal delay elements **1530a, 1530b, 1530c, 1530d, 1530e** connect to the five tap coefficient amplifiers **2210A, 2210B, 2210C, 2210D,** and **2210E.**

A delay element **1530e** is placed at the end to preserve the uniformity of the tap delays, and is not strictly required. The tap-weight amplifiers **2210** are differential variable gain amplifiers that operate by current steering. In an exemplary embodiment, the tap-weight amplifiers **2210** can be viewed as variations of a Gilbert cell.

The tap coefficients **2210A, 2210B, 2210C, 2210D,** and **2210E** are each controlled by an individual DAC **2220** and a common reference DAC **1588.** Each tap coefficient **2210A, 2210B, 2210C, 2210D,** and **2210E** is a function of the differential voltage of the corresponding tap coefficient DAC **2220A-E** and the reference DAC **1588.** The tap coefficients can be positive or negative.

The coefficient DACs **2220A-E** and the reference DAC **1588** can be essentially identical copies of the same circuit and can have essentially identical reference voltages. Sharing a common architecture helps provide immunity to common mode noise and power supply noise.

The reference DAC **2230** can be shared with the delay elements **1530a, 1530b, 1530c, 1530d, 1530e,** if desired. The outputs of all the tap coefficient amplifiers are combined in a summing node **2240.** The summation process occurs by summing the output currents of the tap coefficient amplifiers **2210A-E** in a differential load that is commonly shared by all the tap coefficient amplifiers **2210A-E.** The output **2250** of the FIR filter **1560** from the summation node **2240** provides the output of the emulation channel **1510.**

While Figures 15-22 generally illustrate CMOS implementations, other circuit and/or fabrication technologies can be used. For example, bipolar transistors can substitute for CMOS transistors. Loads shown as resistors can alternatively be active loads or a parallel combination of passive and active loads. Further, one or more of the illustrated DACs **1580, 1582, 1584, 1586** can be replaced with analog voltage control.

In one exemplary embodiment, a crosstalk cancellation device may contain more or fewer temporal alignment devices than the coarse, fine, and variable temporal alignment blocks **1530A, 1530B, 1530C** discussed above and illustrated in Figure 15. Further, the order of the temporal alignment blocks **1530A, 1530B, 1530C** can be changed. For example, in an exemplary embodiment, the variable delay **1530C** might feed the fine temporal alignment **1530B,** which might in turn feed the coarse temporal alignment **1530A.**

In another variation, the number of taps in the FIR filter **1560** could be less or more than exemplary numbers discussed above. In yet another variation, an optional variable gain amplifier can be placed after the FIR summation node **2240.** Such an amplifier can facilitate controlling the emulation channel output amplitude without changing the tap coefficients **2210A, 2210B, 2210C, 2210D,** and **2210E.** However, the addition of a variable gain amplifier after the summation node **2240** may generally lower available bandwidth.

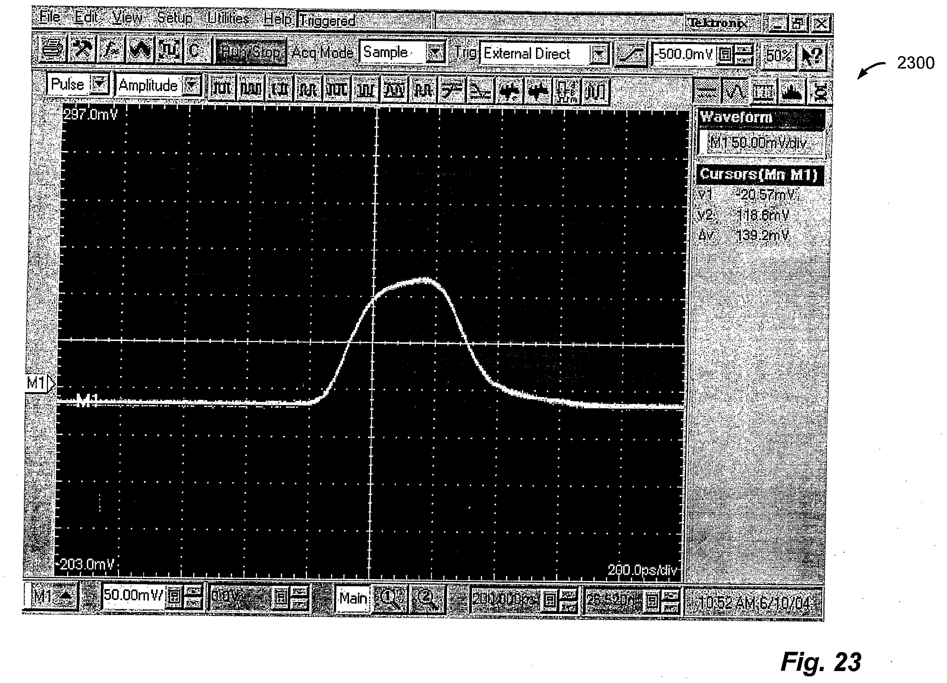

Embodiments of the system **1510** of Figure 15 have been fabricated using 0.18-micron ("µm") and 0.13-µm CMOS technology. As fabricated and tested, the 0.18-µm integrated circuits comprised three coarse selectable delays of approximately 155 picoseconds ("ps") each; three fine selectable delays of approximately 45 ps each; and a five-tap FIR filter with delays of approximately 80 ps, generally corresponding to the illustrated elements **1530A, 1530B, 1530C,** and **1560** discussed above. Figures 23-28 present results of laboratory tests of such fabricated devices.

Figure 23 illustrates an exemplary plot **2300** of voltage as a function of time for an output pulse from an emulation channel circuit **1510** in accordance with an embodiment of the present invention. More specifically, the plot **2300** shows an output pulse at 5 Gbs for a single input pulse through an embodiment of the emulation channel circuit **1510** based on 0.18-µm CMOS. For the test, the FIR filter coefficients **2220A, 2220B, 2220C, 2220D, 2220E** were respectively set to a normalized (1 0 0 0 0) in order to pass the signal without pulse shaping.

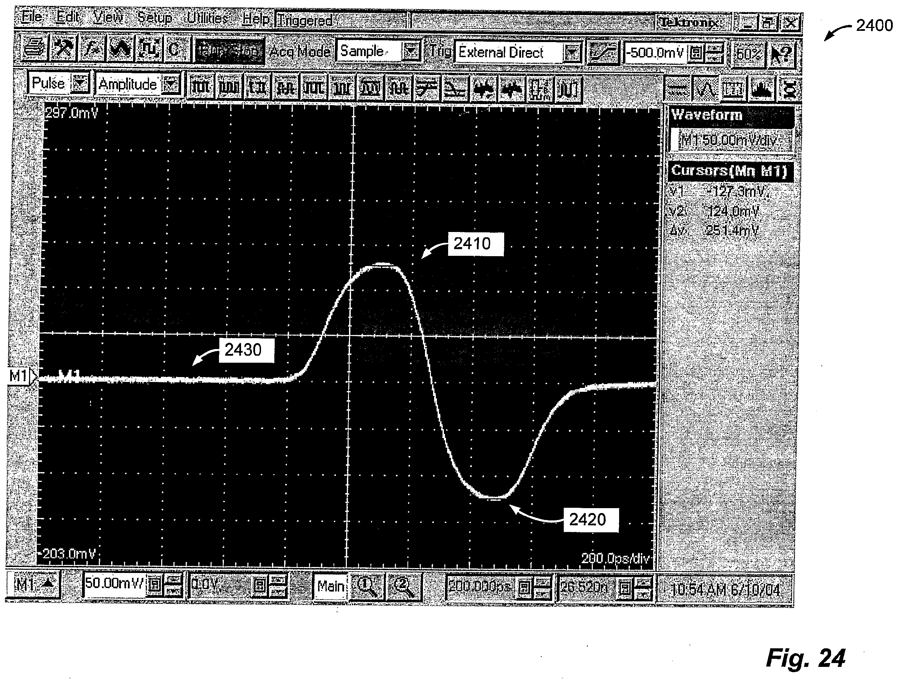

Figure 24 illustrates an exemplary plot **2400** of voltage as a function of time for an output pulse from an emulation channel circuit **1510** in accordance with an embodiment of the present invention. More specifically, Figure 24 provides a demonstration of the ability of the FIR filter **1560** to pulse shape. For the demonstration, an embodiment of the emulation channel circuit **1510** has been fabricated using 0.18 µm CMOS.

The FIR filter coefficients **2220A, 2220B, 2220C, 2220D, 2220E** have been respectively set to a normalized (1 0 0 0 -1). With these values, the circuit **1510** processes a single 5 Gbs input pulse to create two output pulses. The two output pulses include a first pulse **2410** and an inverted second pulse **2420,** respectively rising above and falling below a baseline **2430** as shown in Figure 24.

In this scenario, the FIR filter **1560** effectively functions as a high-pass filter. More generally, the variable tap coefficients **2220A, 2220B, 2220C, 2220D, 2220E** can be set so that the FIR filter **1560** may provide a wide range of different filter responses, thereby providing flexibility and supporting a range of applications.

In one exemplary embodiment, the circuit **1530** of Figure 18 can output a signal similar to the waveform **2400.**

An embodiment of the emulation circuit **1510** has also been fabricated as an integrated circuit in 0.13-µm CMOS. That version had six coarse selectable delays of approximately 160 ps, two fine selectable delays of approximately 85 ps, and a five-tap FIR filter with delays of approximately 95 ps, respectively and generally corresponding to the elements **1530A, 1530B, 1530C,** and **1560** as illustrated in Figure 15 and discussed above. The variable delay section **1530C** is designed to cover approximately 2 fine delays, in order to ensure coverage through an entire unit interval over process, voltage, and temperature. The 0.13-µm CMOS implementation has delay verniers that are programmable through DAC settings.

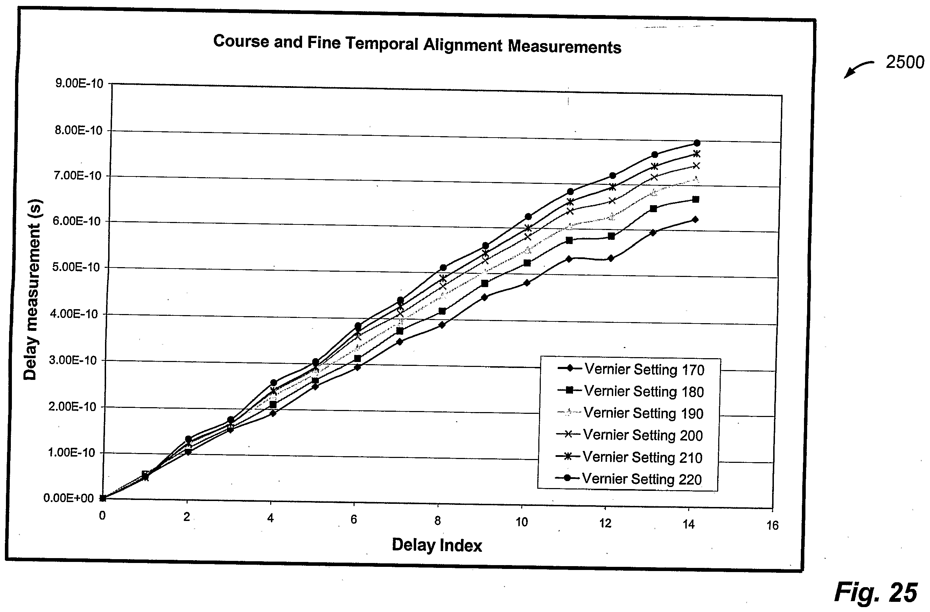

Figure 25 illustrates an exemplary graph **2500** of a family of delay plots for an emulation channel circuit **1510** in accordance with an embodiment of the present invention. More specifically, Figure 25 shows the relative delay measured through the emulation channel circuit **1510** as a function of coarse and fine delay settings as indicated by the delay index on the x-axis at a data rate of 5 Gbs. The illustrated data was collected via laboratory testing of fabricated devices. The relative delay is also shown for various delay vernier settings, demonstrating the ability of the verniers to trim the delay elements, thereby providing selectable levels of signal delay.

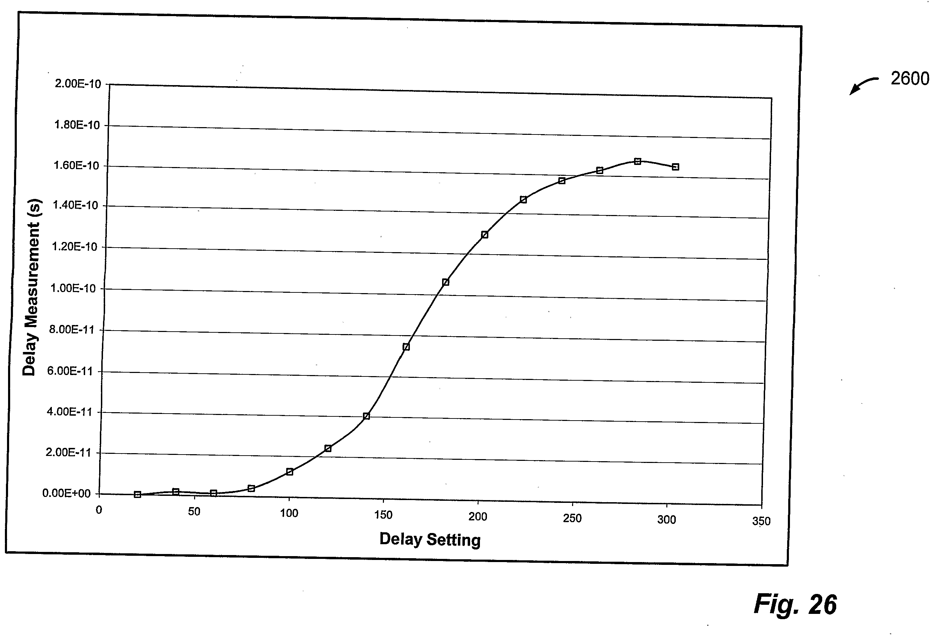

Figure 26 illustrates an exemplary plot **2600** of measured delay as a function of delay setting for an emulation channel circuit **1510** in accordance with an embodiment of the present invention. The data was collected in laboratory testing of devices constructed in keeping with the above discussion. The variable delay is characterized as a function of the hexadecimal DAC setting at 5 Gbs. The plot **2600** shows that a combination of the coarse delays, fine delays, and variable delays provide thorough coverage of delay over several unit intervals. Moreover, the data shown that the actual delay can be set over broad range and that delay is essentially linear over a significant portion of that range.

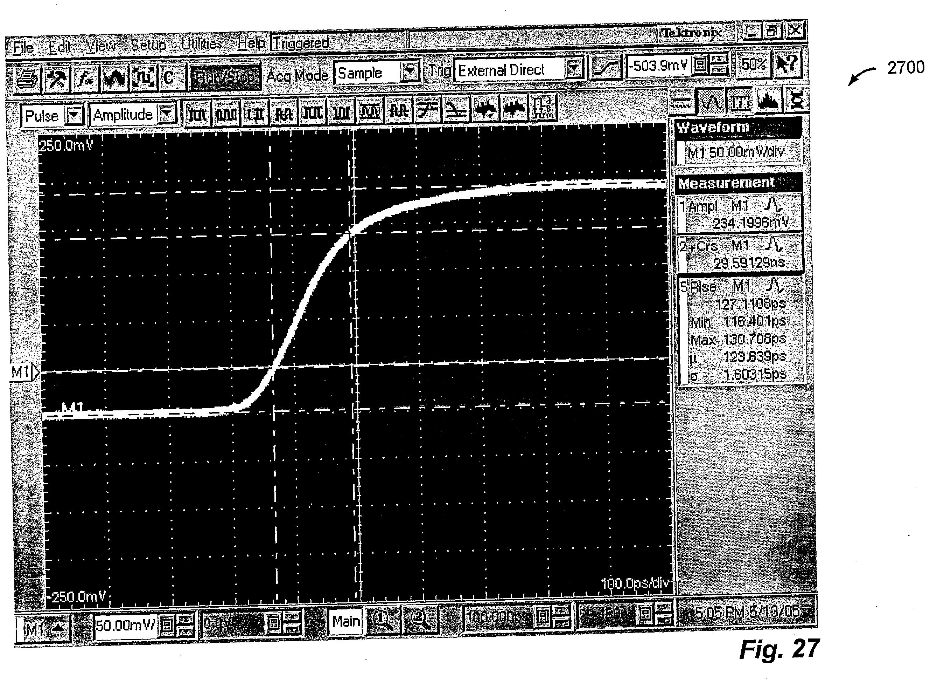

Figure 27 illustrates an exemplary plot **2700** of rise time for an emulation channel circuit **1510** in accordance with an embodiment of the present invention. More specifically, the plot **2700** presents data obtained in laboratory testing of a physical, 0.13-µm integrated circuit implementation of the emulation channel **1510.** The 20%-80% rise time of the pulse is 127 ps after going through the emulation channel. That is, the pulse rises from 20% to 80% of its steady state value after about 127 ps.

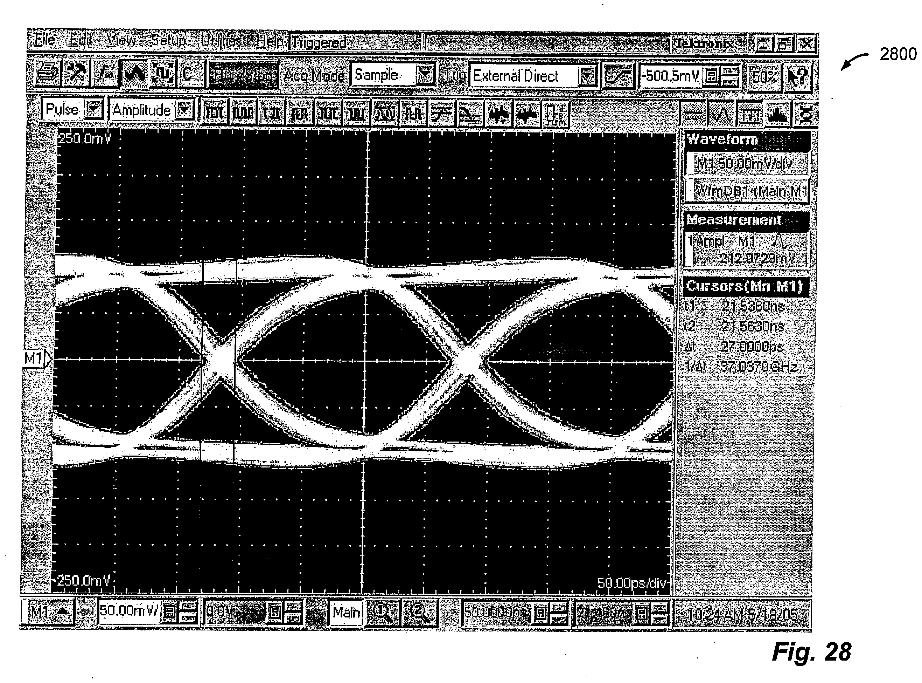

Figure 28 figure illustrates an exemplary eye diagram **2700** for an emulation channel circuit **1510** in accordance with an embodiment of the present invention. The illustrated eye diagram **2700** was collected in laboratory tests of an emulation channel circuit **1510** involving 5 Gbs communication signal comprising a pseudo random bit sequence (PRBS) based on PRBS31.

As discussed above, eye diagrams provide a visual indication of signal quality. The level of openness of an "eye" in an eye diagram correlates with the level of signal quality or integrity. That is, a noisy, distorted, or closed eye in an eye diagram typically indicates signal impairment. An eye diagram can reveal impairments such as jitter, timing problems, noise, etc.

For the illustrated test, the FIR filter coefficients **2220A, 2220B, 2220C, 2220D, 2220E** have been respectively set to a normalized (0 0 1 0 0). This open eye diagram **2800** shows that signal integrity is desirably preserved as the signal propagates through the emulation channel **1510.**

Turning now to Figure 29, this figure illustrates a flowchart of an exemplary process **2900** for delaying a signal in connection with emulating an effect on the signal in accordance with an embodiment of the present invention. Process **2900,** which is entitled Delay Signals, will be discussed with exemplary reference to Figure 20, as described above.

In an exemplary embodiment, Process **2900,** or selected steps therein, can occur at the system **1800** of Figure 18, the system **1535** of Figure 15, the coarse temporal alignment module **1530A,** the fine temporal alignment module **1530B,** the variable delay module **1530C,** or the FIR filter **1560.** Process **2900** can be viewed as an example of a method for routing a signal through a network of delay elements to provide an adjustable amount of delay based on the route that the signal follows through the network.

At Step **2910,** a signal delay device, for example the circuit **1530,** receives a control signal on the control line **2005** that specifies a desired level of signal delay. The control signal may specify or define an absolute delay, a target delay, a relative delay, a time, an incremental change in time delay, or an instruction to increase or decrease a time delay, for example. The control bus **1570** can feed the control line **2005** or can comprise the control line **2005.**

At Step **2920,** a bank or a set of switching elements **2030A, 2030B, 2030C** assume a state according to the control signal. That is, each of the switching elements **2030A, 2030B, 2030C,** which can be viewed as routing elements, is set to direct the flow of electricity through one of two or more paths. For example, the switches **2030A, 2030B, 2030C** can have a state as set forth in the table described above.

At Step **2930,** if the switching elements **2030A, 2030B, 2030C** are set to one state, the signal flows through all of the delay elements **1800A, 1800B, 1800C.** In this situation, the delay of each of the delay elements **1800A, 1800B, 1800C** is accumulative, and the transmitted signal is delayed by a relatively large amount of time. In this state, the switches **2030A, 2030B, 2030C** (which are typically solid state and comprise transistors) are connected in a series configuration. For this configuration, the switch **2030A** has the opposite state from that illustrated in Figure 20, while the switches **2030B** and **2030C** have the illustrated configuration.

As Step **2940,** if the control signal has set the switches **2030A, 2030B, 2030C** to the second state, the signal routes around or bypasses at least one delay element **1800A** and routes through at least one other delay element **1800B, 1800C.** Figure 20 illustrates the switches **2030A, 2030B, 2030C** in such an exemplary configuration.

At Step **2950,** a controller, such as the module **505** of Figures 5, 7, and/or 8 or the module **900** of Figure 9, adjusts, changes, or updates the state to refine the delay. That is, the emulation channel **1510** uses dynamic feedback as discussed above to provide a match between the imparted delay and the emulated signal effect. Process **2900** iterates following Step **2950** to continue refining the level of delay applied to the signal in connection with emulation processing.

Turning now to Figure 30, this figure illustrates a flowchart of an exemplary process **3000** for combining delayed signals in connection with emulating a signal transformation in accordance with an embodiment of the present invention. Process **3000,** which is entitled Add Delayed and Weighted Signals, will be discussed with exemplary reference to Figure 18, as described above.

In an exemplary embodiment, Process **3000,** or selected steps therein, can occur at the system **1800** of Figure 18, the system **1535** of Figure 15, the coarse temporal alignment module **1530A,** the fine temporal alignment module **1530B,** the variable delay module **1530C,** or the FIR filter **1560.**

Moreover, Process **3000** and Process **2900** can execute in parallel with one another, Process **3000** can feed Process **2900,** or Process **2900** can feed Process **3000.** Process **3000** can be viewed as an example of a method feeding a signal through two signal paths, each having a different delay, and creating a weighted sum of the outputs of the two signal paths.

At Step **3010,** the emulation channel **1510** directs a first portion of a sample signal through a delay line **1810** while directing a second portion for transmission over a through line **1805.** In other words, the sample signal, in whole or in part, transmits through two signal paths **1805, 1810** that provide different amounts of delay. The delay path **1810,** which can be viewed as a delay line, has at least one delay element **1815A, 1815B, 1815C, 1815N.** Thus, the transmission time for the signal to propagate through the delay path **1810** is greater than the transmission time for the signal to propagate through the through path **1805.**

At Step **3020** the adjustable selection circuit **1820** receives the respective signals from the delay path **1810** and the through path **1805,** with the signal of the through path arriving in advance of the delay-path signal.

At Step **3030,** the adjustable selection circuit **1820** applies complementary weighting factors to the delayed signal and the through-path signal and combines the result. Thus, the adjustable selection circuit **1830** applies a first gain to the signal from the through path **1805** and a second gain to the signal from the delay path **1810.** As discussed above with reference to Figure 18, the two gains are typically complementary with respect to one another. Combining the weighted or complementarily amplified signal typically comprises adding or summing the two signals together.

At Step **3040,** the adjustable selection circuit **1820** receives a control signal, comprising a weighting specification, via the control line **1822.** The control signal sets the relative weights or gains that the adjustable selection circuit **1820** applies to the outputs of the delay path **1810** and the through path **1805.**

A controller, such as the module **505** of Figures 5, 7, and/or 8 or the module **900** of Figure 9 adjusts, changes, updates the control signal and its weighting specification. The system **1530** uses dynamic feedback as discussed above, thus providing an emulation signal that resembles another signal or a signal effect. Process **3000** iterates following Step **3040** to continue refining the level of signal processing applied to a signal sample in connection with emulation processing.

In summary, an exemplary embodiment of the present invention can apply analog and digital signal processing (or analog signal processing under digital control) to a sample of a digital signal (or to a signal pulse or to some other signal). The signal processing can shape and delay the sample to create a representation of a signal effect. The represented signal effect could be crosstalk or some other phenomenon, for example.

Although a system in accordance with the present invention can comprise a circuit that cancels, corrects, or compensates for crosstalk imposed on one communication signal by another signal, those skilled in the art will appreciate that the present invention is not limited to this application and that the embodiments described herein are illustrative and not restrictive. Furthermore, it should be understood that various other alternatives to the embodiments of the invention described here may be employed in practicing the invention. The scope of the invention is intended to be limited only by the claims below.

## Claims

1. A system (1500) for emulating a transformation of a digital signal, comprising:
a sampling device (1503) operative to obtain a sample of the digital signal from a signal channel;
a limiting amplifier (1525), electrically coupled to an output of the sampling device, for providing a buffer with the signal channel;
a delay module (1535), electrically coupled to an output of the limiting amplifier, operative to receive the sample of the digital signal and to apply a selectable level of delay to the sample;
a programmable filter (1560), electrically coupled in series with the delay module, operative to shape the sample of the digital signal according to at least one adjustable filtering parameter; and
a port (1590), electrically coupled to the programmable filter, for outputting an emulation of the transformation that comprises the shaped and delayed sample of the digital signal;
wherein either i) the delay module comprises at least three delay elements (1530A, 1530B, 1530C), each providing a distinct range of delay based on at least one timing parameter transmitted to the delay module over a digital bus (1570); or
wherein ii) the delay module comprises a plurality of active delay stages (1530A, 1530B, 1530C), each providing a distinct resolution of adjustable delay, and wherein the digital signal, the sample, the shaped sample, the delayed sample, and the emulation of the transformation each has an identical number of digital states.

2. The system of Claim 1, wherein the delay module comprises an active mixed-signal delay line.

3. The system of Claim 1, wherein the delay module comprises an asynchronous delay module that is operative to compensate for roll-off via applying a frequency-dependent level of gain to the sampled digital signal

4. The system of Claim 1, wherein the delay module comprises:
a plurality of delay devices (1530A, 1530B, 1530C); and
a plurality of switching elements (2030A, 2030B, 2030C) for routing the sample of the digital signal through selected ones of the delay devices.

5. The system of Claim 1, wherein the delay module comprises:
a first and a second delay device; and
a signal routing element comprising:
a first state for transmitting the sample of the digital signal through the first and the second delay device; and
a second state for transmitting the sample of the digital signal through the first delay device and for bypassing the second delay device.

6. The system of Claim 1, wherein the delay module comprises:
a first signal path (1805) for feeding a first portion of the sample, having a first delay, to a signal combining device; and
a second signal path (1810) for feeding a second portion of the sample, having a second delay, to the signal combining device,
wherein the signal combining device is operative to perform a weighted summation of the first portion of the sample having the first delay and the second portion of the sample having the second delay.

7. The system of Claim 1, wherein the programmable filter (1560) is operative to amplify at least some frequency component of the sample to compensate for roll-off.

8. The system of Claim 1, further comprising an equalizer module (1830) coupled between the port and at least one of the limiting amplifier and the delay module, and wherein the digital signal, the sample, the shaped sample, the delayed sample, and the emulation of the transformation comprise respective waveforms having a common number of digital states.

9. The system of Claim 1, wherein the delay module comprises: a plurality of signal paths, each with a distinct delay; and a summing element for adding together weighted outputs of the signal paths.

10. The system of Claim 1, wherein the digital signal is digitized to a number of discrete levels, and wherein the sample, the shaped sample, the delayed sample, and the emulation of the transformation is each digitized to no more than the number of discrete levels.

11. The system of Claim 2,
wherein the digital signal carries information via modulation between a plurality of discrete signal levels, and
wherein the limiting amplifier (1525) is operative to process the sample of the digital signal to reinforce the plurality of discrete signal levels.

12. The system of Claim 1, wherein the programmable filter (1560) comprises a plurality of delay elements (1530A, 1530B, 1530C) implemented as active mixed-signal delay lines.

13. The system of Claim 1,
wherein the delay module comprises a plurality of delay elements (1530A, 1530B, 1530C), each comprising an active mixed-signal delay line.

14. The system of Claim 1, wherein the programmable filter (1560) comprises a plurality of delay elements, each operative to compensate for roll-off via applying frequency-dependent gain to the sampled digital signal

15. The system of Claim 11, wherein the delay module (1535) comprises at least three delay devices, each providing a distinct range of delay based on at least one timing parameter transmitted to the delay module over a digital bus.

16. The system of Claim 11,
wherein the delay module (1535) comprises a plurality of active delay stages, each providing a distinct resolution of adjustable delay,
wherein the digital signal has an upper number of discrete levels,
wherein the limiting amplifier (1525) is operative to process the sample of the digital signal while retaining the upper number of discrete levels, and
wherein the programmable filter is operative to shape the sample of the digital signal while retaining the upper number of discrete levels..

17. The system of Claim 11, wherein the delay module comprises:
a plurality of delay devices (1530A, 1530B, 1530C); and
a plurality of switching elements (2030A, 2030B, 2030C) for routing the sample of the digital signal through selected ones of the delay devices.

18. The system of Claim 11, wherein the delay module comprises:
a first and a second delay device; and
a signal routing element comprising:
a first state for transmitting the sample of the digital signal through the first and the second delay device; and
a second state for transmitting the sample of the digital signal through the first delay device and for bypassing the second delay device.

19. The system of Claim 11, wherein the delay module comprises:
a first signal path (1805) for feeding a first portion of the sample of the digital signal, having a first delay, to a signal combining device; and
a second signal path (1810) for feeding a second portion of the sample of the digital signal, having a second delay, to the signal combining device,
wherein the signal combining device is operative to perform a weighted summation of the first portion of the sample of the digital signal having the first delay and the second portion of the sample of the digital signal having the second delay.

20. The system of Claim 11, wherein the programmable filter comprises:
a plurality of signal paths, each with a distinct delay; and
a summing element for adding together weighted outputs of the signal paths.

21. The system of Claim 1, wherein the digital signal is digitized to a number of discrete levels, and wherein the limiting amplifier is operative to apply analog signal processing to the sample of the digital signal while retaining the number of discrete levels.

## Patentansprüche

1. Ein System (1500) zum Emulieren einer Transformation eines digitalen Signals, umfassend: eine Abtastvorrichtung (1503), die dazu dient, einen Abtastwert des digitalen Signals von einem Signalkanal zu erhalten;
einen Begrenzungsverstärker (1525), der elektrisch mit einem Ausgang der Abtastvorrichtung (1503) gekoppelt ist, um einen Puffer mit dem Signalkanal bereitzustellen;
ein Verzögerungsmodul (1535), das elektrisch mit einem Ausgang des Begrenzungsverstärkers (1525) gekoppelt ist und so arbeitet, dass es den Abtastwert des digitalen Signals empfängt und einen auswählbaren Verzögerungspegel auf den Abtastwert aufbringt;
ein programmierbares Filter (1560), das elektrisch in Reihe mit dem Verzögerungsmodul gekoppelt ist und so betreibbar ist, dass es den Abtastwert des digitalen Signals gemäß mindestens einem einstellbaren Filterparameter formt; und
einen Port (1590), der elektrisch mit dem programmierbaren Filter gekoppelt ist, um eine Emulation der Transformation auszugeben, die den geformten und verzögerten Abtastwert des digitalen Signals umfasst;
wobei entweder i) das Verzögerungsmodul mindestens drei Verzögerungselemente (1530A, 1530B, 1530C) aufweist, von denen jedes jeweils einen bestimmten Verzögerungsbereich bereitstellt, basierend auf mindestens einem Zeitsteuerungsparameter, der über einen digitalen Bus (1570) an das Verzögerungsmodul übertragen wird; oder
wobei ii) das Verzögerungsmodul mehrere aktive Verzögerungsstufen (1530A, 1530B, 1530C) umfasst, von denen jede jeweils eine bestimmte Auflösung einstellbarer Verzögerung bereitstellt, und wobei das digitale Signal, der Abtastwert, der geformte Abtastwert, der verzögerte Abtastwert und die Emulation der Transformation jeweils eine identische Anzahl von digitalen Zuständen hat.

2. Das System nach Anspruch 1, wobei ferner das Verzögerungsmodul eine aktive Mischsignalverzögerungsleitung umfasst.

3. Das System nach Anspruch 1, wobei ferner das Verzögerungsmodul ein asynchrones Verzögerungsmodul umfasst, das dazu dient, das Abrollen durch Anlegen eines frequenzabhängigen Verstärkungsniveaus an das abgetastete Digitalsignal zu kompensieren

4. Das System nach Anspruch 1, wobei ferner das Verzögerungsmodul umfasst:
eine Vielzahl von Verzögerungseinrichtungen (1530A, 1530B, 1530C); und
eine Vielzahl von Schaltelementen (2030A, 2030B, 2030C) zum Leiten des Abtastwerts des digitalen Signals durch ausgewählte Verzögerungsvorrichtungen.

5. Das System nach Anspruch 1, wobei das Verzögerungsmodul ferner Folgendes umfasst:
eine erste und eine zweite Verzögerungseinrichtung; und
ein Signalführungselement, umfassend:
einen ersten Zustand zum Übertragen der Probe des digitalen Signals durch die erste und die zweite Verzögerungseinrichtung; und
einen zweiten Zustand zum Übertragen der Probe des digitalen Signals durch die erste Verzögerungseinrichtung und zum Umgehen der zweiten Verzögerungseinrichtung.

6. Das System nach Anspruch 1, wobei ferner das Verzögerungsmodul Folgendes umfasst:
einen ersten Signalpfad (1805) zum Zuführen eines ersten Teils der Probe mit einer ersten Verzögerung zu einer Signalkombinationsvorrichtung; und
einen zweiten Signalpfad (1810) zum Zuführen eines zweiten Teils der Probe mit einer zweiten Verzögerung zu der Signalkombinationsvorrichtung,
wobei die Signalkombinationsvorrichtung wirksam ist, um eine gewichtete Summation des ersten Teils der Probe mit der ersten Verzögerung und des zweiten Teils der Probe mit der zweiten Verzögerung durchzuführen.

7. Das System nach Anspruch 1, wobei ferner das programmierbare Filter (1560) wirksam ist, um mindestens einige Frequenzkomponenten der Probe zu verstärken, um das Abrollen zu kompensieren.

8. Das System nach Anspruch 1, wobei ferner das System ein Entzerrermodul (1830) umfasst, das zwischen dem Port und mindestens einem des Begrenzungsverstärkers und des Verzögerungsmoduls gekoppelt ist, und wobei ferner das digitale Signal, die Probe, die geformte Probe, die verzögerte Probe, und die Emulation der Transformation jeweilige Wellenformen mit einer gemeinsamen Anzahl von digitalen Zuständen umfasst.

9. Das System nach Anspruch 1, wobei ferner das Verzögerungsmodul folgendes umfasst: eine Vielzahl von Signalpfaden, von denen jeder eine unterschiedliche Verzögerung aufweist; und ein Summierelement zum Addieren von gewichteten Ausgaben der Signalpfade.

10. Das System nach Anspruch 1, wobei ferner das digitale Signal zu einer Anzahl diskreter Pegel digitalisiert wird, und wobei die Probe, die geformte Probe, die verzögerte Probe und die Emulation der Transformation jeweils auf nicht mehr Ebenen als die Anzahl diskreter Ebenen digitalisiert werden.

11. Das System nach Anspruch 2,
wobei ferner das digitale Signal Information durch Modulation zwischen mehreren diskreten Signalpegeln überträgt, und
wobei ferner der Begrenzerverstärker (1525) die Probe des digitalen Signals verarbeitet, um die mehreren diskreten Signalpegel zu verstärken.

12. Das System nach Anspruch 1, wobei ferner das programmierbare Filter (1560) eine Vielzahl von Verzögerungselementen (1530A, 1530B) aufweist, die als aktive Mischsignal-Verzögerungsleitungen implementiert sind.

13. Das System nach Anspruch 1, wobei ferner das Verzögerungsmodul eine Vielzahl von Verzögerungselementen (1530A, 1530B) umfasst, von denen jedes eine aktive Mischsignalverzögerungsleitung aufweist.

14. Das System nach Anspruch 1, wobei ferner das programmierbare Filter (1560) eine Vielzahl von Verzögerungselementen umfasst, von denen jedes dazu dient, ein Abrollen durch Anlegen einer frequenzabhängigen Verstärkung an das abgetastete Digitalsignal zu kompensieren.

15. Das System nach Anspruch 11, wobei ferner das Verzögerungsmodul (1535) mindestens drei Verzögerungseinrichtungen umfasst, von denen jede einen bestimmten Verzögerungsbereich bereitstellt, basierend auf mindestens einem Zeitsteuerungsparameter, der über einen digitalen Bus an das Verzögerungsmodul übertragen wird.

16. Das System nach Anspruch 11,
wobei ferner das Verzögerungsmodul (1535) mehrere aktive Verzögerungsstufen umfasst, die jeweils eine bestimmte Auflösung einer einstellbaren Verzögerung bereitstellen,
wobei ferner das digitale Signal eine obere Anzahl von diskreten Pegeln aufweist,
wobei ferner der Begrenzerverstärker (1525) den Abtastwert des digitalen Signals verarbeitet, während er die obere Anzahl diskreter Pegel beibehält, und
wobei ferner das programmierbare Filter dazu dient, den Abtastwert des digitalen Signals zu formen, während die obere Anzahl diskreter Pegel beibehalten wird..

17. Das System nach Anspruch 11, wobei ferner das Verzögerungsmodul umfasst:
eine Vielzahl von Verzögerungseinrichtungen (1530A, 1530B, 1530C); und
eine Vielzahl von Schaltelementen (2030A, 2030B, 2030C) zum Leiten des Abtastwerts des digitalen Signals durch ausgewählte Verzögerungsvorrichtungen.

18. Das System nach Anspruch 11, wobei ferner das Verzögerungsmodul Folgendes umfasst:
eine erste und eine zweite Verzögerungseinrichtung; und
ein Signalführungselement, umfassend:
einen ersten Zustand zum Übertragen der Probe des digitalen Signals durch die erste Verzögerungseinrichtung und die zweite Verzögerungseinrichtung; und
einen zweiten Zustand zum Übertragen der Probe des digitalen Signals durch die erste Verzögerungseinrichtung und zum Umgehen der zweiten Verzögerungseinrichtung.

19. Das System nach Anspruch 11, wobei ferner das Verzögerungsmodul umfasst:
einen ersten Signalpfad (1805) zum Zuführen eines ersten Teils der Probe des digitalen Signals mit einer ersten Verzögerung zu einer Signalkombinationsvorrichtung; und
einen zweiten Signalpfad (1810) zum Zuführen eines zweiten Teils der Probe des digitalen Signals mit einer zweiten Verzögerung zu der Signalkombinationsvorrichtung,
wobei die Signalkombinationsvorrichtung wirksam ist, um eine gewichtete Summation des ersten Teils der Probe des digitalen Signals mit der ersten Verzögerung und des zweiten Teils der Probe des digitalen Signals mit der zweiten Verzögerung durchzuführen.

20. Das System nach Anspruch 11, wobei ferner das programmierbare Filter umfasst:
eine Vielzahl von Signalpfaden, jeweils mit einer bestimmten Verzögerung; und
ein Summierelement zum Addieren von gewichteten Ausgaben der Signalpfade.

21. Das System nach Anspruch 1, wobei ferner das digitale Signal auf eine Anzahl von diskreten Pegeln digitalisiert ist und wobei der Begrenzungsverstärker betriebsfähig ist, eine analoge Signalverarbeitung auf den Abtastwert des digitalen Signals anzuwenden, während die Anzahl von diskreten Pegeln beibehalten wird.

## Revendications

1. Système (1500) destiné à émuler une transformation de signal numérique, comprenant :
un dispositif d'échantillonnage (1503) permettant d'obtenir un échantillon du signal numérique à partir d'un canal de signalisation ;
un amplificateur limiteur (1525) couplé électriquement à une sortie du dispositif d'échantillonnage pour assurer un tampon par rapport au canal de signalisation ;
un module de retard (1535) couplé électriquement à une sortie de l'amplificateur limiteur, permettant de recevoir l'échantillon du signal numérique et d'appliquer un niveau sélectionnable de retard à l'échantillon ;
un filtre programmable (1560) couplé électriquement en série avec le module de retard, permettant de mettre en forme l'échantillon du signal numérique en fonction d'au moins un paramètre de filtrage réglable ; et
un port (1590) couplé électriquement au filtre programmable, pour délivrer une émulation de la transformation qui comprend l'échantillon mis en forme et retardé du signal numérique ; dans lequel soit
i̅) le module de retard comprend au moins trois éléments de retard (1530A, 1530B, 1530C) procurant chacun une plage distincte de retard sur la base d'au moins un paramètre de temporisation transmis au module de retard sur un bus numérique (1570) ; soit
ii) le module de retard comprend une pluralité d'étages de retard actifs (1530A, 1530B, 1530C), procurant chacun une résolution distincte de retard réglable, et dans lequel le signal numérique, l'échantillon, l'échantillon mis en forme, l'échantillon retardé et l'émulation de la transformation ont chacun un nombre identique d'états numériques.

2. Système selon la revendication 1, dans lequel le module de retard comprend une ligne de retard de signaux mixtes active.

3. Système selon la revendication 1, dans lequel le module de retard comprend un module de retard asynchrone qui permet de compenser un affaiblissement par application d'un niveau de gain dépendant de la fréquence au signal numérique échantillonné.

4. Système selon la revendication 1, dans lequel le module de retard comprend :
une pluralité de dispositifs de retard (1530A, 1530B, 1530C) ; et
une pluralité d'éléments de commutation (2030A, 2030B, 2030C) destinés à acheminer l'échantillon du signal numérique à travers ceux sélectionnés des dispositifs de retard.

5. Système selon la revendication 1, dans lequel le module de retard comprend :
un premier et un second dispositif de retard ; et
un élément d'acheminement de signaux, comprenant :
un premier état destiné à transmettre l'échantillon du signal numérique à travers le premier et le second dispositif de retard ; et
un second état destiné à transmettre l'échantillon du signal numérique à travers le premier dispositif de retard et à contourner le second dispositif de retard.

6. Système selon la revendication 1, dans lequel le module de retard comprend :
un premier trajet de signal (1805) destiné à appliquer une première partie de l'échantillon, ayant un premier retard, à un dispositif de combinaison de signaux ; et
un second trajet de signal (1810) destiné à appliquer une seconde partie de l'échantillon, ayant un second retard, au dispositif de combinaison de signaux,
dans lequel le dispositif de combinaison de signaux permet d'effectuer une sommation pondérée de la première partie de l'échantillon ayant le premier retard et de la seconde partie de l'échantillon ayant le second retard.

7. Système selon la revendication 1, dans lequel le filtre programmable (1560) permet d'amplifier au moins une certaine composante de fréquence de l'échantillon pour compenser un affaiblissement.

8. Système selon la revendication 1, comprenant en outre un module égaliseur (1830) couplé entre le port et l'amplificateur limiteur et/ou le module de retard, et dans lequel le signal numérique, l'échantillon, l'échantillon mis en forme, l'échantillon retardé et l'émulation de la transformation comprennent des formes d'onde respectives ayant un nombre commun d'états numériques.

9. Système selon la revendication 1, dans lequel le module de retard comprend : une pluralité de trajets de signaux ayant chacun un retard distinct ; et un élément de sommation destiné à additionner entre elles des sorties pondérées des trajets de signaux.

10. Système selon la revendication 1, dans lequel le signal numérique est numérisé sur un certain nombre de niveaux discrets, et dans lequel l'échantillon, l'échantillon mis en forme, l'échantillon retardé et l'émulation de la transformation sont numérisés chacun sur au plus le nombre de niveaux discrets.

11. Système selon la revendication 2,
dans lequel le signal numérique est porteur d'informations par modulation entre une pluralité de niveaux discrets de signal, et
dans lequel l'amplificateur limiteur (1525) permet de traiter l'échantillon du signal numérique pour renforcer la pluralité de niveaux discrets de signal.

12. Système selon la revendication 1, dans lequel le filtre programmable (1560) comprend une pluralité d'éléments de retard (1530A, 1530B, 1530C) mis en oeuvre sous la forme de lignes de retard de signaux mixtes actives.

13. Système selon la revendication 1,
dans lequel le module de retard comprend une pluralité d'éléments de retard (1530A, 1530B, 1530C) comprenant chacun une ligne de retard de signaux mixtes active.

14. Système selon la revendication 1, dans lequel le filtre programmable (1560) comprend une pluralité d'éléments de retard permettant chacun de compenser un affaiblissement par application d'un gain dépendant de la fréquence au signal numérique échantillonné.

15. Système selon la revendication 11, dans lequel le module de retard (1535) comprend au moins trois dispositifs de retard procurant chacun une plage distincte de retard sur la base d'au moins un paramètre de temporisation transmis au module de retard sur un bus numérique.

16. Système selon la revendication 11,
dans lequel le module de retard (1535) comprend une pluralité d'étages de retard actifs procurant chacun une résolution distincte de retard réglable,
dans lequel le signal numérique a un nombre supérieur de niveaux discrets,
dans lequel l'amplificateur limiteur (1525) permet de traiter l'échantillon du signal numérique tout en conservant le nombre supérieur de niveaux discrets, et
dans lequel le filtre programmable permet de mettre en forme l'échantillon du signal numérique tout en conservant le nombre supérieur de niveaux discrets.

17. Système selon la revendication 11, dans lequel le module de retard comprend :
une pluralité de dispositifs de retard (1530A, 1530B, 1530C) ; et
une pluralité d'éléments de commutation (2030A, 2030B, 2030C) destinés à acheminer l'échantillon du signal numérique à travers ceux sélectionnés des dispositifs de retard.

18. Système selon la revendication 11, dans lequel le module de retard comprend :
un premier et un second dispositif de retard ; et
un élément d'acheminement de signaux, comprenant :
un premier état destiné à transmettre l'échantillon du signal numérique à travers le premier et le second dispositif de retard ; et
un second état destiné à transmettre l'échantillon du signal numérique à travers le premier dispositif de retard et à contourner le second dispositif de retard.

19. Système selon la revendication 11, dans lequel le module de retard comprend :
un premier trajet de signal (1805) destiné à appliquer une première partie de l'échantillon du signal numérique, ayant un premier retard, à un dispositif de combinaison de signaux ; et
un second trajet de signal (1810) destiné à appliquer une seconde partie de l'échantillon du signal numérique, ayant un second retard, au dispositif de combinaison de signaux,
dans lequel le dispositif de combinaison de signaux permet d'effectuer une sommation pondérée de la première partie de l'échantillon du signal numérique ayant le premier retard et de la seconde partie de l'échantillon du signal numérique ayant le second retard.

20. Système selon la revendication 11, dans lequel le filtre programmable comprend :
une pluralité de trajets de signaux, ayant chacun un retard distinct ; et
un élément de sommation destiné à additionner entre elles des sorties pondérées des trajets de signaux.

21. Système selon la revendication 1, dans lequel le signal numérique est numérisé sur un certain nombre de niveaux discrets, et dans lequel l'amplificateur limiteur permet d'appliquer un traitement de signal analogique à l'échantillon du signal numérique, tout en conservant le nombre de niveaux discrets.
